# EUROPEAN PATENT SPECIFICATION

(11) **EP 3 575 113 B1**
(45) Date of publication and mention of the grant of the patent: **29.04.2020**
(21) Application number: 19156591.0
(22) Date of filing: 23.05.2018
(51) Int. Cl.: B60D 1/06, B60R 9/06

(54) **LOAD CARRIER COUPLING**
LASTENTRÄGERKUPPLUNG
DISPOSITIF D'ACCOUPLEMENT DE PORTE-CHARGE

(43) Date of publication of application: 04.12.2019
(62) Divisional of application: 18173745.3
(73) Proprietor: Thule Sweden AB, 335 04 Hillerstorp (SE)
(72) Inventor: LINDELL, Morgan, 33135 Värnamo (SE); SVENSSON, Thomas, 33196 Värnamo (SE); FERMAN, Magnus, 33154 Värnamo (SE); JÖNSSON, Tobias, 33132 Värnamo (SE); KRONBORG, Niklas, 22649 Lund (SE)
(74) Representative: Wallentin, Lars

(56) References cited:
- EP-A1- 2 774 785
- US-A1- 2014 210 186
- US-A1- 2015 375 585

## Description

### FIELD OF THE INVENTION

The present invention relates to load carrier couplings.

### BACKGROUND

Load carrier couplings of the type mountable to the trailer coupling of a vehicle are known in the art. Load carriers with such load carrier couplings have become increasingly popular. A main task in the development of such load carrier couplings is to provide a cost efficient and secure coupling for load carriers.

US 2014/210186 A1 discloses a generic load carrier coupling.

### SUMMARY

It is the object of the invention to provide an enhanced load carrier coupling.

The object is solved by a load carrier coupling according to claim 1. Advantageous further formations are subject of the dependent claims.

According to a first example, a load carrier coupling for mounting a load carrier on a trailer coupling of a vehicle is disclosed. The trailer coupling of the vehicle can comprise a neck, a coupling body supported by the neck and at least one support protrusion. The coupling body can be a ball head. The support protrusion can be a solid of revolution. For example, the support protrusion can be a cone, a truncated cone, a cylinder, a hemispherical body, a paraboloid of revolution or a hyperboloid of revolution. Furthermore, the support protrusion can be an oblique cone, an oblique cylinder or an oblique truncated cone. The support protrusion can be a prism, for example a right prism or an oblique prism. Furthermore, the support protrusion can be a truncated prism. The prism can comprise a polygonal base which may be convex, concave, equilateral or cyclic. The support protrusion can comprise a lateral outer surface which forms a supporting surface for an element to be supported thereon. In the context of the present disclosure, lateral outer surface or lateral surface refers to a surface which extends along a main extension direction of the support protrusion. The main extension direction can be the axis of revolution in case the support protrusion comprises the shape of a solid of revolution. The main extension direction can also be a longitudinal axis of the support protrusion. The longitudinal axis of the support protrusion can be any axis which is not parallel with respect to an extension direction of the neck of the trailer coupling. The extension direction of the trailer coupling extends in longitudinal direction of a vehicle to which the trailer coupling is mounted.

The load carrier coupling comprises a housing. The housing can be configured to accommodate at least a portion of the coupling body. Furthermore, the housing can be configured to support further elements of the load carrier coupling. The housing can also be a supporting element to which further elements of the load carrier are coupled. Such elements can be frame portions of the load carrier forming a supporting basis of the load carrier. The load carrier can be a bike carrier. The load carrier can also be a transport platform onto which goods to be transported can be fixed. The housing can be made of a rigid material which is able to withstand high forces. For example, the housing can be made of steel.

The load carrier coupling can further comprise a receiving portion which is configured to at least partially receive the coupling body. In the context of the present disclosure, configured to at least partially receive means that the receiving portion comprises a shape which is able to at least partially surround the coupling body. For that, the receiving portion can comprise a recess or a bowl-like geometry. For example, the receiving portion can be designed to be able to accommodate a spherical segment of a ball head.

The load carrier coupling can further comprise a supporting portion which is configured to contact an upper portion of the at least one support protrusion when the load carrier coupling is inserted on the trailer coupling. Accordingly, the load carrier coupling can be supported on the support protrusion such that a supporting force acting in vertical direction is born by the support protrusion. For example, the supporting portion can be configured to contact the above-described lateral outer surface or lateral surface of the support protrusion. In addition or alternatively, the supporting portion can be configured to contact a free end of the support protrusion, for example an end surface extending cross to the main extension direction of the support protrusion. For example, in case the support protrusion is a cylindrical element or a truncated cone, the free end surface can extend perpendicular to the axis of revolution.

The receiving portion can be arranged in the housing pivotably movable between an engaging state in which the receiving member contacts an inserted coupling body and an open state which is taken by the receiving member when no coupling body is inserted. For example, the receiving portion can be directly pivotably supported on a portion of the housing. For example, the housing can comprise openings in which a pivot portion of the receiving portion is pivotably held. Preferably, a pivot axis about which the receiving portion is pivotably movable is arranged substantially perpendicular to a symmetry plane of the receiving portion or perpendicular to a symmetry plane of a surface of the recess.

In the context of the present disclosure, the engaging state is to be understood as a state in which the receiving member contacts an inserted coupling body from below. In other words, in the engaging state, the receiving member contacts a lower portion of an inserted coupling body. In the engaging state, the receiving member applies an urging force on the lower portion of the inserted coupling body. This urging force urges the inserted coupling body in a vertically upward direction. In the context of the present disclosure, an open state is a state which is taken by the receiving member when no coupling body is inserted. Accordingly, the receiving portion is able to move into the open state when no coupling body is inserted. In order to assist the receiving member in moving into the open state, the receiving member can be spring biased towards the open state. In the open state, a portion of the receiving member which contacts an inserted coupling body from below in the engaging state is moved to a position in which it is not able to contact the coupling body from below and in particular cannot prevent the coupling body from being pulled out of the housing.

The load carrier coupling can be configured such that it is lockable on the trailer coupling by an interaction of the receiving portion contacting the lower portion of the coupling body in the engaging state and the supporting portion contacting said upper portion of the at least one support protrusion. Accordingly, the load carrier coupling is lockable on the trailer coupling by exerting a pushing force on a lower portion of the coupling body which leads to a state in which the supporting portion is actively pressed on the support protrusion.

According to a preferable configuration of the first example, a movement of the receiving portion from the open state to the engaging state is at least partially caused by a pushing force applied on the receiving portion by the coupling body upon inserting the load carrier coupling on the trailer coupling. In the context of the present disclosure, at least partially caused means that at least a part of the movement of the receiving portion is caused by the pushing force applied on the receiving force by the coupling body. When the load carrier coupling is inserted on the trailer coupling, the receiving portion can get in contact with a portion of the coupling body and a relative movement of the load carrier coupling with respect to the trailer coupling leads to a movement of the receiving portion. For example, the receiving portion can be configured such that a movement from the open state to the engaging state is almost fully caused by the coupling body exerting a pushing force on the receiving portion. However, it is to be understood that at least partially caused also includes a case in which the receiving portion is only initially moved due to a pushing force applied on the receiving portion by the coupling portion in order to move the receiving portion from the open state. Thus, the movement can also include a movement of the receiving portion which is caused by a means or an element different to the coupling body.

For example, a mechanism can be provided which actively moves the receiving portion after the receiving portion was moved by the coupling body to a certain extent. The mechanism can be configured such that upon moving the receiving portion from the open state to the engaging state, the receiving portion passes an intermediate position. At the intermediate position, the mechanism changes the behaviour of the receiving portion such that a movement of the receiving portion between this intermediate position and the engaging state is now assisted. Thus, as soon as the receiving portion has passed the intermediate position, the receiving portion is not furthermore moved by a pushing force applied by the coupling body but is moved by a different force so that from the intermediate position on the receiving portion applies a pushing force on a lower portion of the coupling body. In other words, the receiving portion has a self-actuating capability. With such a configuration, it is possible to provide a load carrier coupling in which the load carrier coupling is automatically locked on the trailer coupling as soon as the load carrier coupling is inserted on the trailer coupling. This allows a configuration in which a user does not need to actively lock the load carrier coupling to the trailer coupling. In this way, the usability of the load carrier coupling is increased.

According to a further preferable configuration of the first example of the present disclosure, the load carrier coupling further comprises a knee-joint mechanism operatively coupled to the receiving portion and adapted for moving the receiving portion. According to this preferable configuration, a movement of the receiving portion from the open state to the engaging state is at least partially caused by an operation of the knee-joint mechanism. The use of a knee-joint mechanism has the benefit, that a low force input by a user can be transferred into a higher force application on the receiving portion so that it is possible to increase a final tightening force acting on the coupling body. Furthermore, the knee-joint mechanism can comprise a self-locking capability. More precisely, the knee-joint mechanism can be configured to be brought into an over-centre position. In such a position, a movement of parts of the knee-joint mechanism is prevented and this state can only be released by an interaction of a user moving parts of the knee-joint mechanism. With such a configuration, the safety of such a load carrier coupling is increased.

According to a further preferable configuration of the first example, the supporting portion and the receiving portion can be configured such that when the receiving portion is in the engaging state, the supporting portion is pushed on the support protrusion. Preferably, the supporting portion is pushed on an upper portion of the support protrusion. Accordingly, with such a configuration, the receiving portion can be configured to apply a force on the coupling portion that generates a movement of the load carrier coupling with respect to the trailer coupling in such a manner that the supporting portion is actively pushed on the support protrusion. For example, the support protrusion can be arranged vertically below the coupling portion of the trailer coupling. Thus, the supporting portion and the receiving portion can be correspondingly arranged on the load carrier coupling such that in a mounted condition of the load carrier coupling the supporting portion is in contact with the support protrusion and the receiving portion is in contact with the coupling body. The receiving portion can be configured to exert a vertically upward force on the coupling body that urges the load carrier coupling in a vertically downward direction. In this way, the supporting portion is pressed on the support protrusion from above. With such a configuration, a secure connection between the load carrier coupling and the trailer coupling is possible.

According to a further preferable configuration of the first example of the present disclosure, the housing can comprise a supporting section for supporting a portion of the coupling body. Preferably, at least the receiving portion can be configured such that it supports the coupling body from below when the receiving portion is in the engaging state. Accordingly, the load carrier coupling can be configured such that only a lower portion of the coupling body is supported when the load carrier coupling is fixedly mounted on the trailer coupling. The supporting section of the housing and the portion of the receiving portion contacting the coupling body can be arranged on opposite sides of the coupling body with respect to a neck portion of the trailer coupling on which the coupling body is coupled to the neck. The supporting section can be integrally formed with the housing or can be a separate element which is fixedly mounted to the housing. The supporting section and the receiving portion define an accommodating space in which the coupling body is arranged when the load carrier coupling is fixedly mounted on the trailer coupling. When the receiving portion is in the engaging state, a distance between the receiving portion and the supporting section is such that the coupling body cannot be passed between the supporting section and the receiving portion.

According to a further preferable configuration of the first example according to the present disclosure, the supporting section comprises a protrusion for supporting the lower portion of the coupling body wherein the protrusion protrudes towards the engaging member and comprises a support surface configured to support the lower portion of the coupling body. The protrusion can be integrally formed in the housing. The support surface can comprise any suitable shape which allows a sufficient support of the lower portion of the coupling body. For example, the support surface can comprise a support surface which is mating to the outer contour of the lower portion of the coupling body. For example, when the coupling body is a ball head with a substantially spherical lower portion, the support surface can be adapted to such a spherical surface. More precisely, the support surface can be configured to support a spherical zone of the ball head. For that, the support surface can comprise a bowl-like shape. Instead of a protrusion, the supporting section can comprise a supporting surface which is defined by substantially parallel straight lines which preferably extend in substantially vertical direction when the load carrier coupling is mounted on the trailer coupling. The supporting section is preferably curved along the coupling portion. The supporting section formed in this way can be configured to contact a middle section of a ball head at which the upper and the lower portion of the ball head meet. Such a supporting section can be configured to get in line contact with the outer surface of the ball head or in surface contact with a coupling body having a flat surface. Preferably, the housing does not comprise a section that allows a diagonal clamping between the receiving member and the supporting section of the housing. Accordingly, the housing is preferably formed such that a movement of the load carrier coupling towards the support protrusions is not blocked by an element of the housing contacting an upper portion of the coupling body, i.e. the ball head. In other words, the housing can be configured such that an upper portion of the coupling body cannot be contacted by the housing.

According to a further preferable configuration of the first example according to the present disclosure, the load carrier coupling is configured such that the movement of the receiving portion is partially caused automatically as soon as the support protrusion is inserted in said supporting portion beyond a predetermined distance. The predetermined distance can be a distance which corresponds to a movement of the receiving portion effected by a contact of the coupling body up to the before-described intermediate position.

According to a further preferable configuration of the first example according to the present disclosure, the receiving portion is arranged pivotable about a pivot axis. The pivot axis can be substantially perpendicular to an insertion direction of the load carrier coupling on the trailer coupling. The insertion direction of the load carrier coupling on the trailer coupling is preferably a movement in vertical direction or substantially vertical direction. Accordingly, the pivot axis can extend substantially horizontally when the load carrier coupling is mounted on a trailer coupling. For example, the pivot axis can be configured so as to extend in cross direction of the vehicle when the load carrier coupling is mounted on the trailer coupling.

According to a further preferable configuration of the first example, the receiving portion can be pretensioned such that it is urged towards the open state by a predetermined receiving portion pretensioning force. The pretensioning of the receiving portion can be provided by means of a spring. With such a configuration, the receiving portion automatically moves into the open state when the load carrier coupling is dismounted from the trailer coupling.

According to a further preferable configuration of the first example according to the present disclosure, the receiving portion comprises a recess for accommodating a portion of the coupling body. The recess can be configured to receive a portion of a ball head. For example, the recess can comprise a bowl shape with an inner surface being formed so as to contact the ball head only at spherical zones of the same. Accordingly, the recess can be formed such that in each position or orientation of the receiving portion in which the receiving portion is in contact with a ball head, only a spherical zone of the ball head is contacted. As already described above, the receiving portion can be configured to contact a ball head from below when it is in the engaging state. Accordingly, a spherical zone on the ball head provided in the lower portion of the ball head can be contacted.

According to a further preferable configuration of the first example according to the present disclosure, the load carrier coupling further comprises a locking member for blocking a movement of the receiving portion. The locking member can be configured self-actuated, preferably by pretensioning or prebiasing the same by means of a spring or any other suitable urging means. Furthermore, the locking member can be configured to move into a locking position on its own as soon as the receiving member is moved to a predetermined position, for example the above-mentioned intermediate position. The locking member can be configured such that a user can operate the same in order to disengage the locking member from the receiving portion.

Preferably, the locking member comprises a first contact portion for contacting a first abutment portion of the receiving portion in the open state and a second contact portion for contacting a second abutment portion of the receiving portion in the engaging state. The contact portion and the abutment portion are preferably configured to get in sliding contact. Furthermore, the locking member can comprise an abutment protrusion which is configured to limit a movement, for example a sliding movement, of the receiving portion along the first contact portion.

According to a further preferable configuration of the first example according to the present disclosure, the locking member is pivotably movable about a pivot axis. Preferably, the pivot axis about which the locking member is pivotably movable is substantially parallel to the pivot axis about which the receiving portion is pivotably movable as described above in the context of another preferable configuration of the first example. Preferably, the locking member is pretensioned or prebiased by a locking member pretensioning force such that the contact portions are urged towards the receiving portion. The pretensioning of the locking member can be provided by means of a spring.

According to a further preferable configuration of the first example according to the present disclosure, the locking member preferably comprises a lever having a gripping portion usable for manually moving the locking member against the locking member pretensioning force. In this way, a good operability for a user is achieved.

According to a further preferable configuration of the first example according to the present disclosure, the supporting portion comprises a recess for accommodating at least a portion of the support protrusion. The recess may be formed in or may be provided on the housing. For example, the recess can be integrally formed in the housing. Different methods of forming the recess in the housing are available including cutting out of the recess in a wall portion of the housing or deforming the housing such that such a recess is created. It is also possible to fixedly arrange a separate element forming such recess on the housing, for example by welding. Preferably, the recess is U-shaped and is provided such that an open side faces downward when the load carrier coupling is mounted on the trailer coupling. Furthermore, the U-shaped recess can be provided on a side wall, for example in such a manner that the side wall of the housing closes one side of the U-shaped element. Preferably, the side wall of the housing on which the recess can be formed, extends substantially perpendicular to the pivot axis of the receiving portion.

According to a further preferable configuration of the first example according to the present disclosure, the recess can be defined by two substantially parallel side portions and a bottom portion connecting the side portions, wherein the bottom portion comprises a recess which is formed such that an upper portion of the support protrusion is at least partially not in contact with the supporting portion when the load carrier coupling is mounted on the trailer coupling.

With the above-described load carrier coupling according to the first example and the configurations related to the first example it is possible to provide a simple and reliable load carrier coupling which is mountable on a trailer coupling of a vehicle from above. Furthermore, with the configurations as presented above, a solution is provided in which a tightening of the mechanism is possible by the user with an application of a low force or even without the application of any force.

Advantages of the load carrier coupling as described in connection with the first example and the configurations related thereto are a configuration in which no pressure is applied on the top of the coupling body of the trailer coupling. In other words, it is possible to provide a solution in which a fixation of the load carrier coupling according to the first example can be realized in that the load carrier coupling is supported against an upper portion of the support protrusion and against a lower portion of the coupling body, for example the ball head. For stability reasons, the housing can be configured such that it provides abutment surfaces facing end surfaces of the support protrusions as mentioned above. In the concept according to the first example, the moving part of the mechanism which corresponds to the above-mentioned receiving portion contacts the coupling portion, for example a towball, on the lower portion. The housing or the recess provided on the housing is configured to contact the support protrusion on an upper portion thereof. With the above-described solutions, a load carrier coupling with increased initial stability and a self-centering function is achieved. Furthermore, the configuration as described above can be self-locking. In case the above-described receiving portion and the locking member are specifically designed, it is even possible to realize a self-adjustability during use of the load carrier coupling. As described above, the locking member can be configured to apply a force on the receiving portion in order to urge the receiving portion towards the engaging state and lock the same in this position. The contact portions between the receiving portion and the locking member can be configured such that the receiving portion is able to move into the engaging state even if the dimension of the trailer coupling varies.

According to a second example, a load carrier coupling for mounting a load carrier on a trailer coupling of a vehicle is disclosed. The trailer coupling can be a trailer coupling as described before. The load carrier coupling comprises a housing which is configured to at least partially receive the coupling body of the trailer coupling. The load carrier coupling according to the second example further comprises a supporting portion which is configured to contact the at least one support protrusion. The supporting portion is arranged pivotably movable with respect to the housing about a pivot axis between an engaging state in which the supporting portion contacts an inserted support protrusion and an open state which is taken by the supporting portion when no support protrusion is inserted. The movement of the supporting portion from the open state to the engaging state is at least partially caused by a pushing force applied on the supporting portion by the support protrusion upon inserting the load carrier coupling on the trailer coupling. Accordingly, an engaging state is achieved by a pivoting movement of the supporting portion.

According to a preferable configuration of the second example of the present disclosure, the supporting portion comprises a recess. The recess can be a slot and is intended for accommodating the support protrusion.

According to a further preferable configuration of the present disclosure, the recess extends in a direction which is skew to the pivot axis.

According to a further preferable configuration of the second example of the present disclosure, the recess comprises an inner surface which at least partially extends substantially parallel to the pivot axis. Preferably, at least a portion of the inner surface is U-shaped with a preferably non-circularly curved bottom portion.

According to a further preferable configuration of the second example, the supporting portion comprises a plate extending in a direction substantially perpendicular to the pivot axis of the supporting portion wherein the recess is formed in the plate.

According to a further preferably configuration of the second example, the supporting portion further comprises a protrusion configured to receive the pushing force from the support protrusion. The protrusion can comprise a sliding surface for contacting the support protrusion and can be configured to slide on the support protrusion when the supporting portion is moved between the open state and the engaging state.

According to a further preferable configuration of the second example, the load carrier coupling further comprises an abutment portion for contacting the support protrusion on one side. Preferably, the abutment portion is formed by one of two walls of an insertion recess which can be provided in the housing.

According to a further preferable configuration of the second example, the load carrier coupling further comprises a locking mechanism for releasably locking the supporting portion at least in the engaging state.

According to a further preferable configuration of the second example, the supporting portion comprises a cam surface and the locking mechanism is configured to apply a normal force on the cam surface. The cam surface and the locking mechanism are configured such that the supporting portion is releasably locked in the open state and the engaging state.

According to a further preferable configuration of the second example, the cam surface comprises a first surface area which is formed such that a normal force acting on the same generates a first moment urging the supporting portion towards the open state and a second surface area which is formed such that a normal force acting on the same generates a second moment urging the supporting portion towards the engaging state.

According to a further preferable configuration of the second example, the locking mechanism comprises a force application member which is pushed onto the cam surface by an urging member. Preferably, the urging member is a spring. Preferably, the force application member is provided on a tip end of a lever which is arranged pivotable about a pivot axis which is parallel to the pivot axis of the supporting portion.

According to a further preferable configuration of the second example, the locking mechanism comprises an engaging member for locking a movement of the supporting portion relative to the housing. The engaging member can be a pin. Preferably, the engaging member is pretensioned in engaging direction by means of an urging member. The urging member can be a spring. Preferably, the engaging member is movable in a disengaging direction by an operating member which is operable by a user.

According to a further preferable configuration of the second example, the load carrier coupling further comprises a lever fixedly coupled to the supporting portion and allowing a manual operation of the supporting portion.

According to a further preferable configuration of the second example, the receiving portion is configured to receive an upper portion of the coupling body. The supporting portion can be configured to support a lower portion of the support protrusion.

According to a thirst example, a load carrier coupling for mounting a load carrier on a trailer coupling of a vehicle is disclosed. The trailer coupling can be a trailer coupling as described above. The load carrier coupling comprises a receiving portion, a supporting portion and an engaging member. The receiving portion comprises an accommodating section which is configured to accommodate a portion of the coupling body. The supporting portion is configured to contact at least one support protrusion. The engaging member is adapted to engage with a support protrusion and to apply a tightening force on the support protrusion by a movement including a pivoting movement and a translatory movement. With such a construction, it is possible to bring the engaging member into engagement with a support protrusion and to then apply a tightening force on the support protrusion via the engaging member by moving the engaging member translatory.

According to a preferable configuration of the third example of the present disclosure, the engaging member is configured to at least partially perform a combined movement in which the pivoting movement and the translatory movement are superimposed. Accordingly, the pivoting movement and the translatory movement can at least partially be performed at the same time.

According to a further preferable configuration of the third example of the present disclosure, the engaging member is arranged pivotably about a pivot which is translatory movable in a radial direction thereof. Accordingly, the pivoting movement of the engaging member can be performed about the pivot whereas the translator movement can be performed in a radial direction of the pivot. The pivot can be a pivot pin for instance.

According to a further preferable configuration of the third example of the present disclosure, the load carrier coupling further comprises a housing having a guiding portion for supporting and guiding the pivot. The guiding portion can be a guiding recess. Furthermore, the guiding portion can be an opening formed in the housing, such as a slot.

According to a further preferable configuration of the third example of the present disclosure, the guiding recess is formed so as to guide the pivot on an at least partially curved path. Accordingly, the guiding recess can be guided on a path which is curved in sections or fully curved. On the other hand, it is possible that the path comprises straight sections between curved sections.

According to a further preferable configuration of the third example according to the present disclosure, the recess is formed in the housing such that it extends substantially vertically when the load carrier coupling is mounted on the trailer coupling. Accordingly, the recess can be formed straight. According to this configuration, when the load carrier coupling is mounted on the trailer coupling, the pivot of the engaging member is movable in vertical direction. The recess and the pivot can be configured such that the width of the recess substantially corresponds to a diameter of the pivot. Thus, the pivot is able to slide within the recess between a lower position and an upper position.

According to a further preferable configuration of the third example according to the present disclosure, the engaging member comprises a lever. The lever can comprise an engaging portion which is adapted to engage with the support protrusion. The engaging portion can comprise a recess configured to accommodate at least a portion of the support protrusion therein. The recess can comprise a U-shape with an inner wall defining at least two contact areas for supporting the support protrusion.

According to a further preferable configuration of the third example of the present disclosure, the engaging member comprises a deformation portion which is formed such that an application of a tensile load bendably deforms the deformation portion. Accordingly, the engaging member can act as a spring.

According to a further preferable configuration of the third example of the present disclosure, the deformation portion comprises a curved shape.

According to a further preferable configuration of the third example of the present disclosure, the engaging member is a plate. The plate can be cut from a sheet metal.

According to a further preferable configuration of the third example of the present disclosure, the load carrier coupling further comprises an operating lever for operating the engaging member. The operating lever can be pivotably movable about a pivot which is parallel to the pivot of the engaging member. Preferably, the operating lever and the engaging member form a self-locking knee joint mechanism.

According to a further preferable configuration of the third example of the present disclosure, the engaging member is movable between an engaging state and an opened state. When the load carrier coupling is mounted on a trailer coupling fixed to the rear of a vehicle, the engaging member preferably extends in substantially vertical direction. Extending in substantially vertical direction means that the above-described engaging portion as well as all pivot portions of the engaging member are substantially arranged on a vertical line. Preferably, the engaging member engages the support protrusion such that the same is contacted on its lower vehicle facing side of the support protrusion.

According to an aspect, a load carrier coupling for mounting a load carrier on a trailer coupling of a vehicle is provided. The trailer coupling can be configured as described with respect to the previous examples. The load carrier coupling comprises a receiving portion and a supporting portion. The receiving portion comprises an accommodating section which is configured to accommodate a portion of the coupling body therein. The supporting portion comprises an engaging section which is configured to contact at least one support protrusion. According to this aspect the receiving portion and the supporting portion are pivotably coupled to each other by means of a pivot such that a distance between the accommodating section and the engaging section can be varied by pivoting the receiving portion or the supporting portion about the pivot. The receiving portion and the supporting portion can be pivoted between an open state in which the distance between the accommodating section and the engaging section is such that the load carrier coupling is insertable on the trailer coupling, and a closed state in which the distance is such that a load carrier coupling inserted on the trailer coupling cannot be removed from the trailer coupling.

According to a preferable embodiment of this aspect, the load carrier coupling is configured such that in a condition in which the load carrier coupling is mounted on a trailer coupling, the pivot is located at a position which is vertically between the coupling body and the support protrusion. According to a further preferable embodiment of this aspect, the receiving portion is configured to contact the coupling body from below. Furthermore, the supporting portion is configured to contact the support protrusion from above.

According to a further embodiment of this aspect, the receiving portion is configured to contact the coupling body from above and the supporting portion is configured to contact the support protrusion from below.

According to a further preferable embodiment of this aspect, the load carrier coupling further comprises an urging member for applying an urging force on the supporting portion and the receiving portion. The urging member is arranged to urge the supporting portion and the receiving portion towards the open state or can be arranged to urge the supporting portion and the receiving portion towards the closed state.

According to a further preferable embodiment of this aspect, the load carrier coupling further comprises a locking mechanism for releasably locking a movement between the receiving portion and the supporting portion such that a movement towards the open state is blocked.

According to a further preferable embodiment of this aspect, the locking mechanism comprises a tightening member with an abutment portion wherein the position of the abutment portion is variable by rotation of the tightening member about its own longitudinal axis.

According to a further preferable embodiment of this aspect, the locking mechanism comprises a locking lever arranged pivotably on the receiving portion between a locking position in which a free end of the locking lever contacts an abutment portion of the supporting portion and a released position in which the free end is pivoted away from the abutment portion.

According to a further preferable embodiment of this aspect, the locking mechanism comprises a cam mechanism for varying and locking a distance between the receiving portion and the supporting portion. The cam mechanism preferably comprises an operating lever having a cam portion wherein the cam portion comprises a cam surface which is operatively coupled to the receiving portion or the supporting portion and wherein the operating lever is further hingedly coupled to a link which is operatively coupled to the other one of the supporting portion or the receiving portion such that a movement of the lever moves the receiving portion and the supporting portion towards and away from each other.

According to a fourth example, a load carrier coupling for mounting a load carrier on a trailer coupling of a vehicle is provided. The trailer coupling can be configured like the trailer couplings as described before with respect to the other examples and aspect. The load carrier coupling according to the fourth example comprises a receiving portion, a supporting portion and a force transfer member. The receiving portion comprises an accommodating section which is configured to accommodate at least a portion of the coupling body. The supporting portion is configured to engage with the support protrusion of the trailer coupling. The force transfer member is adapted to vary a distance between the receiving portion and the supporting portion by translatory moving at least one of the receiving portion and the supporting portion in a first direction.

The force transfer member can be arranged movable in a second direction which is different from the first direction. The force transfer member can be movable between a disengaging position and an engaging position. In the disengaging position, the distance between the receiving portion and the supporting portion is larger than in the engaging position. The force transfer member can be part of a linkage mechanism. For example, the force transfer member can be a link of the linkage mechanism, which link can be hingedly coupled to the receiving portion. The linkage mechanism can be a knee joint mechanism. The linkage mechanism can comprise an operating lever which is hingedly coupled to the housing by means of a first pivot and to a link by means of a second pivot which is offset from the first pivot by a predetermined distance. The link is pivotably coupled to the receiving portion by means of a third link. The first pivot is coupled to the housing at a portion which is located under the third pivot. Alternatively, the first pivot can be arranged above the third pivot. The pivot axes of the pivots are preferably parallel with respect to each other.

According to a preferable configuration of the fourth example, the force transfer member is arranged translatory movable in the second direction.

According to a further preferable configuration of the fourth example, the second direction is substantially perpendicular to the first direction. Accordingly, the force transfer member can be movable perpendicular to the movement direction of the receiving portion or the supporting portion.

According to a further preferable configuration of the fourth example, the force transfer member can be a wedge-like member having a supporting surface and a force application surface arranged at an angle with respect to the supporting surface. The force application surface can be in contact with a force receiving surface of the receiving portion.

According to a further preferable configuration of the fourth example, the force application surface and the force receiving surface are provided such that a force acting on the receiving portion in the first direction cannot effect a movement of the force transfer member in the second direction.

According to a further preferable configuration of the fourth configuration, the supporting surface is arranged substantially perpendicular to the first direction. The force application surface can be arranged with respect to the supporting surface at an angle which is preferably smaller than 45 degrees.

According to a further preferable configuration of the fourth configuration, the force transfer member can be pretensioned in the engaging direction by an urging member. The urging member can be a spring. According to a further preferable configuration of the fourth example, the load carrier coupling further comprises a housing. Preferably, the supporting portion is integrally formed in the housing. Preferably, the receiving member and the force transfer member are slideably supported on the housing.

According to a further preferable configuration of the fourth example, the load carrier coupling further comprises a lever which is operatively coupled to the force transfer member and configured to at least move the force transfer member to the disengaging position upon operation of the same. The lever is preferably pivotably coupled to the force transfer member at a first end. Furthermore, the lever is preferably pivotably mounted on the housing. Preferably, the lever comprises a handle on a second end thereof. The handle can be configured to be grasped by a user for operating the lever. The first end of the lever can be coupled to a pivot pin. The pivot pin can be slideably accommodated in a guiding recess formed in the force transfer member. The guiding recess can be a slot. The guiding recess can be straight and can extend in a direction which is substantially perpendicular to the second direction.

According to a fifth example, a load carrier coupling for mounting a load carrier on a trailer coupling of a vehicle is provided. The trailer coupling can be configured identical to the trailer couplings as described before with respect to the other aspects. The load carrier coupling according to the fifth example comprises a contact portion and a supporting mechanism. The contact portion is configured to contact at least a portion of the coupling body. The supporting mechanism comprises a blocking portion which is operatively coupled with the contact portion and movable between a blocking position and a release position. In the blocking position, the blocking portion is positioned with respect to the support protrusion such that a movement of the contact portion with respect to the coupling body is substantially blocked in at least one movement direction. In the release position, the blocking portion is positioned with respect to the support protrusion such that a movement of a contact portion with respect to the coupling body is not blocked by the blocking portion. The blocking portion is arranged so as to be movable into the blocking position by a movement in an extension direction of the support protrusion in which the support protrusion extends away from the neck, and at least partially along a lateral surface of the support protrusion.

According to a further preferable configuration of the fifth example, the load carrier coupling comprises two blocking portions arranged on opposite sides of the contact portion and arranged movable towards and away from each other.

According to a further preferable configuration of the fifth example, each blocking portion is pivotably movable about a pivot which extends perpendicular to and is offset from the extension direction of the support protrusion.

According to a further configuration of the fifth example, each blocking portion comprises an abutment surface facing the lateral surface when the support protrusion is positioned in the blocking position.

According to a further preferable configuration of the fifth example, each blocking portion comprises a recess adapted to accommodate at least a portion of the support protrusion. The recess can be preferably formed as a through hole extending in the blocking portion in a movement direction of the blocking portion. The recess is preferably formed slot like with an extension direction perpendicular to and offset from the pivot axis defined by the pivot which extends perpendicular to and is offset from the extension direction of the support protrusion.

According to a further preferable configuration of the fifth example, each blocking portion is formed from a metal sheet by cutting and bending.

According to a further preferable configuration of the fifth example, each blocking portion comprises a contact surface for contacting a neck support surface. The neck support surface is preferably a ring-like surface provided at a route portion of the support protrusion.

According to a further preferable configuration of the fifth example, the load carrier further comprises a support structure. The support structure preferably comprises a portion of a frame of a load carrier. The frame of the load carrier can comprise a hollow metal profile. Preferably, the contact portion and each blocking portion are provided on the support structure. Preferably, the contact portion limits an upper end of an accommodating space for accommodating the coupling member. Preferably, the contact portion is integrally formed with the support structure. Alternatively, the contact portion can be formed as an adjustable member allowing to adjust a position of the contact portion relative to the support structure. For example, the adjustable member can be a threaded element which is threadedly engaged with a threaded opening provided in an upper portion of the support structure. In this way, the adjustable member is adjustable by rotation of the same owing to the threaded engagement between the adjustable member and the support structure.

According to a further preferable configuration of the fifth example, each blocking portion is operatively coupled to a knee lever mechanism for moving the blocking portion between the blocking position and the release position. The knee lever mechanism is preferably configured to be brought in an over-center position in which a movement of the blocking portion is substantially blocked. Preferably, the knee lever mechanism comprises an operating handle for operating the knee lever mechanism.

According to a further preferable configuration, the supporting mechanism is configured to apply a tightening force on the blocking portion when the blocking portion is in contact with the support protrusion. Preferably, the supporting mechanism is configured to allow a rotation of the blocking portion beyond a position of first contact with the support protrusion.

### BRIEF DESCRIPTION OF THE DRAWINGS

Figure 1 shows a side view of a load carrier coupling according to the first example of the present disclosure.
Figure 2 shows a view of the load carrier coupling of Figure 1 obliquely from above.
Figure 3 shows a perspective view of the load carrier coupling of Figure 1 from below.
Figure 4 shows a perspective view of a receiving portion of the load carrier coupling of Figure 1.
Figure 5 shows a sectional side view of the load carrier coupling of Figure 1 in a dismounted state.
Figure 6 shows a sectional side view of the load carrier coupling of Figure 1 in a state, in which the load carrier coupling is already partially inserted on the trailer coupling.
Figure 7 shows a sectional side view of the load carrier coupling of Figure 1 in a state in which the load carrier coupling is fixedly mounted on the trailer coupling.
Figure 8 shows an enlarged view of a supporting portion of the load carrier coupling according to Figure 1.
Figure 9 shows a sectional side view of the load carrier coupling of Figure 1 in a state, in which a locking member of the same is operated in preparation of a dismounting action by a user.
Figure 10 shows a sectional side view of the load carrier coupling of Figure 1 in a state in which the load carrier coupling is already partially removed from the trailer coupling.
Figure 11 shows contact areas of the load carrier coupling according to the first example on a trailer coupling.
Fig. 11a shows a modification of the load carrier coupling according to the first example.
Figure 12 shows a rear view of a trailer coupling 1 to which the load carrier coupling is mountable.
Figure 13 shows a side view of the trailer coupling as shown in Figure 12.
Figure 14 and Figure 15 show perspective views of a load carrier coupling according to a second example.
Figure 16 and Figure 17 show perspective sectional side views of the load carrier coupling according to the second example.
Figure 18 shows a side view of a supporting portion as used in the load carrier coupling according to the second example.
Figures 19 to 21 show a mounting process of the load carrier coupling according to the second example.
Figures 22 to 24 show a dismounting process of the load carrier coupling according to the second example.
Figures 25 to 27, 25a and 27a show perspective views of modifications of the load carrier coupling according to the second example.
Figure 28 shows contact areas of the load carrier coupling according to the second example on a trailer coupling.
Figure 29 shows a perspective view of a load carrier coupling according to the third example which is arranged above a trailer coupling.
Figure 30 is a perspective view showing the rear side of the load carrier coupling shown in Figure 29.
Figure 31 shows a side view of the load carrier coupling of Figures 29 and 30 in an open state.
Figure 32 shows the load carrier coupling of Figure 31 in engaging state.
Figure 33 shows a portion of a housing of the load carrier coupling according to the third example.
Figure 34 shows an engaging member of the load carrier coupling according to the third example.
Figure 35 shows a sectional side view of the load carrier coupling according to the third example.
Figure 36 shows a modification of the load carrier coupling according to the third example.
Figure 37 shows a modification of the engaging member of the load carrier coupling according to the third example.
Figure 38 shows contact areas of the load carrier coupling according to the third example on a trailer coupling.
Figure 39 and Figure 40 show perspective views of an embodiment of a load carrier coupling according to an aspect.
Figures 41 to 43 show side views of a trailer coupling and of the load carrier coupling according to the first embodiment of the aspect during a mounting process.
Figure 44 shows contact areas of the load carrier coupling according to a first embodiment of the aspect on a trailer coupling.
Figures 45 and 46 show a second embodiment of a load carrier coupling according to the aspect.
Figures 47 to 49 illustrate a mounting process of the load carrier coupling according to the second embodiment of the aspect on a trailer coupling.
Figure 50 shows contact areas of the load carrier coupling according to the second embodiment of the aspect on a trailer coupling.
Figure 51 and Figure 52 show perspective views of a third embodiment of a trailer coupling according to the aspect.
Figures 54 to 56 show a mounting process of the load carrier coupling according to the third embodiment of the aspect on a trailer coupling.
Figure 57 shows contact areas of the load carrier coupling according to the third embodiment of the aspect on a trailer coupling.
Figure 58 shows a perspective view of a load carrier coupling according to the fourth example.
Figures 59 to 61 show sectional views of the load carrier coupling according to the fourth example.
Figure 62 shows a perspective view of a force transfer member as used in the load carrier coupling according to the fourth example.
Figures 63 to 65 illustrate a mounting process of the load carrier coupling according to the fourth example on a trailer coupling.
Figure 66 shows contact areas of the load carrier coupling according to the fourth example on the trailer coupling.
Figures 66a and 66b show a further embodiment of a load carrier coupling according to the fourth example.
Figure 67 shows a perspective view of a load carrier coupling according to a fifth example.
Figure 68 shows a perspective view of the load carrier coupling according to the fifth example from below.
Figure 69 and Figure 70 show side views of the main elements of the load carrier coupling according to the fifth example in different states.
Figures 71 to 73 illustrate a mounting process of the load carrier coupling according to the fifth example on the trailer coupling.

### DETAILED DESCRIPTION OF EMBODIMENTS

Examples and embodiments of the present disclosure will be described with reference to the drawings. It is noted that the same reference numerals in the drawings denote identical or similar elements.

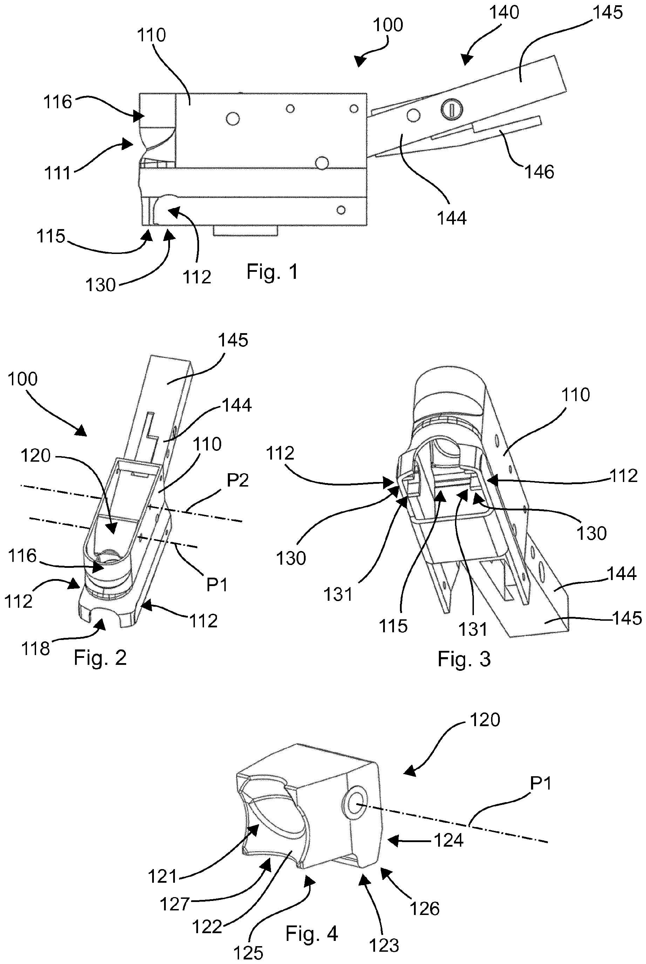

Figure 1 shows a load carrier coupling 100 according to a first example of the present disclosure. The load carrier coupling 100 is depicted in side view and comprises a housing 110. The housing defines an accommodating space 115 which is configured to accommodate and receive a coupling body 3 embodied as a tow ball or ball head as well as a portion of the neck 2 of the trailer coupling 1 therein.

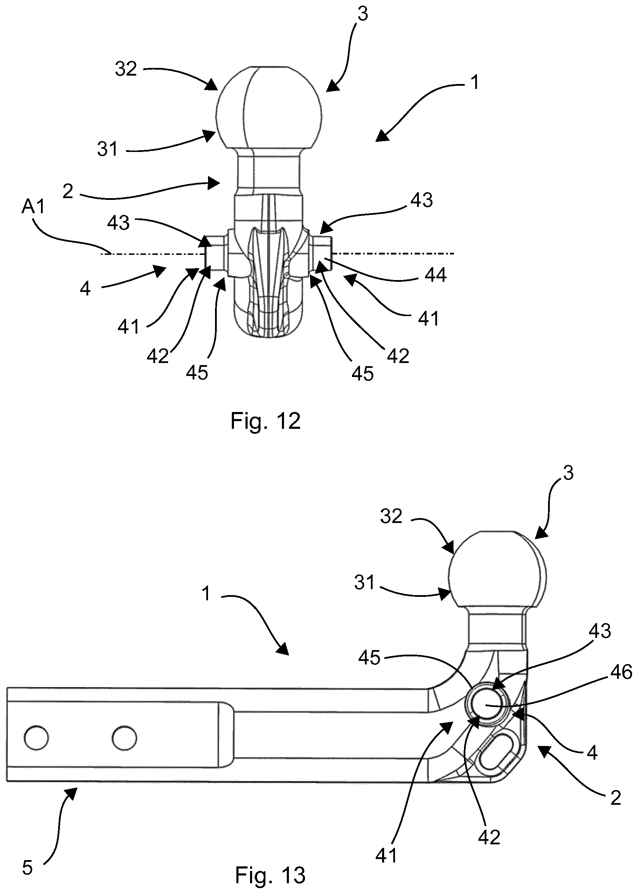

The load carrier coupling 100 as well as all load carrier couplings described below are configured to be used with a specific trailer coupling 1 of the type as is shown in Figures 12 and 13. The trailer coupling 1 comprises a neck 2, a coupling body 3 which is supported by the neck 2 and two support protrusions 4 that protrude from the neck on opposite sides. The coupling body is a ball head also referred to as tow ball. The support protrusions 4 have the shape of cylindrical pins 41. The ball head or coupling body 3 comprises a spherical outer surface which comprises a lower portion 31 and an upper portion 32. In the present context, the lower portion 31 is the portion of the coupling body which is located below a horizontal plane extending through the middle point of the ball head. On the other hand, the upper portion 32 is the portion which is located above that plane.

Similar to the latter definition of the upper portion 32 and the lower portion 31, the cylindrical pins 41 comprise an upper portion 43 and a lower portion 42. More precisely, the portion which is located below a horizontal plane extending through the middle axis of the cylindrical pin is considered a lower portion 42 and the portion which is located above the latter plane is considered the upper portion 43. The cylindrical pin 41 furthermore comprises a lateral surface 44 which extends in a ring-like manner about the rotational axis of the cylindrical pins 41. Accordingly, a portion of the lateral surface 44 is located in the upper portion 43 and another portion of the lateral surface 44 is located in the lower portion 42. The lateral surface is available for supporting an element of the load carrier coupling thereon. Furthermore, a neck support surface 45 is provided at a bridging portion or root portion of the cylindrical pins 41 which in the present configuration extends substantially perpendicular to the middle axis or rotational axis of the cylindrical pins 41. The neck support surfaces 45 are also available for supporting a portion of a load carrier coupling thereon. The cylindrical pins 41 further comprise end surfaces 46 which in the configuration as shown extend substantially perpendicular to the longitudinal axis A1 of the cylindrical pins 41. The end surfaces 46 are arranged so as to face away from each other. The end surfaces 46 are available to get in contact with a load carrier coupling in order to provide a support in lateral direction of the trailer coupling 1 or to allow a suitable guiding of the load carrier coupling onto the trailer coupling 1. The neck support surface 45 and the end surface 46 of one of the cylindrical pins 41 are also shown in Figure 13 which shows a side view of the trailer coupling 1. On the opposite end to the end at which the ball head 3 is supported by the neck 2, the trailer coupling 1 comprises a mounting portion 5 which is configured for mounting the trailer coupling 1 to a vehicle (not shown).

Referring back to Figure 1, the housing 110 further comprises a supporting section 111 and side walls 112 limiting the above-mentioned accommodating space 115 on opposite sides. On the side walls, a supporting portion 130 is provided which will be described later. The side walls 112 are coupled to each other by means of a bridging portion 116. In the present configuration, the bridging portion 116 comprises a rounded shape and limits the above-mentioned accommodating space 115 on a side of the load carrier coupling 100 which in use or when mounted on the trailer coupling 1 is oriented towards the rear of a vehicle.

As is further shown in Figure 1, the load carrier coupling further comprises a locking member 140 which can also be described as operating member for a user. The locking member 140 comprises a lever 144 and a gripping portion 145 which is graspable by a user. The locking member 140 has the function of locking the load carrier coupling 100 onto the trailer coupling 1 as soon as the coupling body 3 of the trailer coupling 1 is fully inserted into the above-described accommodating space 115. The function and further details of the locking member 140 will be described later.

Figures 2 and 3 show perspective views of the load carrier coupling 100 wherein Figure 2 shows a perspective view from above and Figure 3 shows a perspective view from below. The load carrier coupling 100 further comprises a receiving portion 120 which is configured to partially receive the ball head 3. The receiving portion 120 is a separate member which is pivotably coupled to the housing 110, for instance by means of a pivot pin (not shown). The receiving portion 120 can also be referred to as receiving member. The receiving portion 120 is pivotable about a pivot axis P1. The lever 144 is coupled to the housing 110 pivotably movable about a pivot axis P2. The receiving portion 120 and the lever 144 are coupled to the housing such that the pivot axis P1 and P2 are arranged parallel with respect to each other. The lever 144 and the receiving portion 120 are arranged such that they can contact each other.

The housing 110 further comprises a recess 118 which is formed in the lower portion of the bridging portion 116 and serves for accommodating a portion of the neck of the trailer coupling 1 to which the load carrier coupling 100 is mountable. As is shown in Figure 3, the supporting portion 130 comprise recesses 131 that are provided on an inner side of the side walls 112 and in such a manner that they are substantially symmetrically formed with respect to a vertical middle plane of the load carrier coupling 100 that extends along the longitudinal direction of the load carrier coupling 100. The recesses 131 are formed so as to be able to accommodate the support protrusions 4 of the trailer coupling 1 therein.

Figure 4 shows a perspective view of the receiving portion 120. As already mentioned above, the receiving portion 120 is a separate element or member which can also be described as receiving member in the present configuration. The receiving portion 120 comprises a recess 121 for accommodating a portion of the ball head 3. The recess 121 comprises a bowl shape with an inner surface 122 which is formed such that the ball head is only contacted at a section of a spherical zone of the same when the recess 121 or inner surface 122 is in contact with the outer surface of the ball head 3. In a lower portion 125 of the receiving portion 120, an accommodating recess 127 is provided which is able to accommodate a portion of the neck 2 of the trailer coupling 1 therein. With this configuration, the inner surface 122 can be provided such that the outer surface of the ball head 3 can be contacted to a greater extent.

The side on which the recess 121 with the inner surface 122 is provided on the receiving portion 120 will also be referred to as front portion of the receiving portion 120. Following this definition, the receiving portion 120 also comprises a back portion which is arranged on the opposite side of the pivot axis P1, a lower portion which is located below the pivot axis P1 and an upper portion which is located above the pivot axis P1. On the lower back portion of the receiving portion 120, a first abutment portion 123 is provided in the form of a flat surface extending substantially parallel to the pivot axis P1. On the back portion of the receiving portion 120, a second abutment portion 124 is provided in the form of another flat surface which extends in a plane which is substantially parallel to the pivot axis P1. The first abutment portion 123 and the second abutment portion 124 are arranged at an angle with respect to each other and the surfaces of the first abutment portion 123 and the second abutment portion 124 are connected to each other via a surface of a bridging portion 126 which in the configuration is a rounded edge provided at a lower edge portion of the receiving portion 120. The first abutment portion 123 and the second abutment portion 124 as well as the bridging portion 126 are provided for an interaction with the locking member 140 as will be described later.

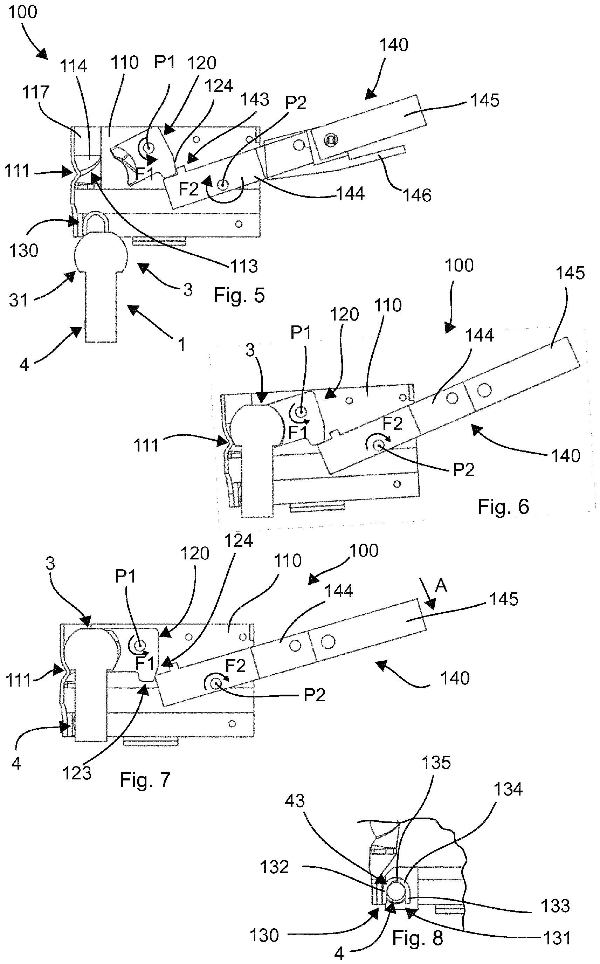

The configuration of the supporting portion 130 will be described in greater detail with respect to Figure 8. The supporting portion 130 comprises the recess 131 as already mentioned above which in the configuration is provided on the housing 110, more precisely integrally formed with the housing 110. The recess 131 is U-shaped with an open side facing downward towards the lower portion of the housing 110. The recess 131 is defined by two substantially parallel side portions 132, 133 and a bottom portion 134 connecting the side portion on an upper side. The bottom portion 134 comprises a recess 135 which is formed such that an upper portion 43 of the support protrusion 4 is at least partially not in contact with the supporting portion 130. In other words, since the recess 135 is provided in the bottom portion 134, the supporting portion gets in contact with two surface sections on the lateral surface of a support protrusion 4. In Figure 8, a support protrusion 4 inserted into the recess 131 of the supporting portion 130 is shown. The bottom portion 134 is supported against the upper portion of the support protrusion 4 on both sides of the recess 135. By providing the recess 135, it is possible to distribute the supporting forces acting on the support protrusion 4 away from the center of the support protrusion 4.

The interior structure of the load carrier coupling as well as the operation and function thereof will be described with reference to Figures 5 to 7 and Figures 9 and 10. In Figure 5, an interior configuration of the supporting section 111 of the housing 110 is shown. The supporting section 111 comprises a protrusion 113 for supporting the lower portion 31 of the coupling body 3 when the same is inserted into the load carrier coupling 100. The protrusion 113 is arranged so as to protrude towards the engaging portion 120. The protrusion 130 comprises a support surface 114 configured to support the lower portion 31 of the ball head 3. In the present configuration, the protrusion 113 is formed by deforming a portion of the housing 110. Therefore, the protrusion 113 is visible as a recess on the outer surface of the housing 110.

As already mentioned above, the bridging portion 116 comprises a rounded shape and consequently a curved inner surface 117. The inner surface 117 is formed according to an outer contour of the ball head 3. The above-described support surface 114 is formed such that it joins with the inner surface 117 at an upper end thereof. The support surface 114 comprises a bowl-like shape and is configured to contact a portion of a spherical zone of the ball head 3 at a lower portion 31 thereof. The support surface 114 and the lower portion of the inner surface of the receiving portion 120 are arranged substantially at the same height when the load carrier coupling 100 is fixedly mounted to the trailer coupling 1. As is indicated by an arrow F1, the receiving portion 120 is pretensioned in a counter-clockwise direction. For that purpose, an urging member (not shown) is provided which urges the receiving portion 120 about the pivot axis P1 in counter-clockwise direction. Furthermore, the lever 144 is also pretensioned or prebiased in the direction of arrow F2 in clockwise direction. Accordingly, the receiving portion 120 and the lever 144 are pretensioned or prebiased in opposite directions about their respective pivot axis.

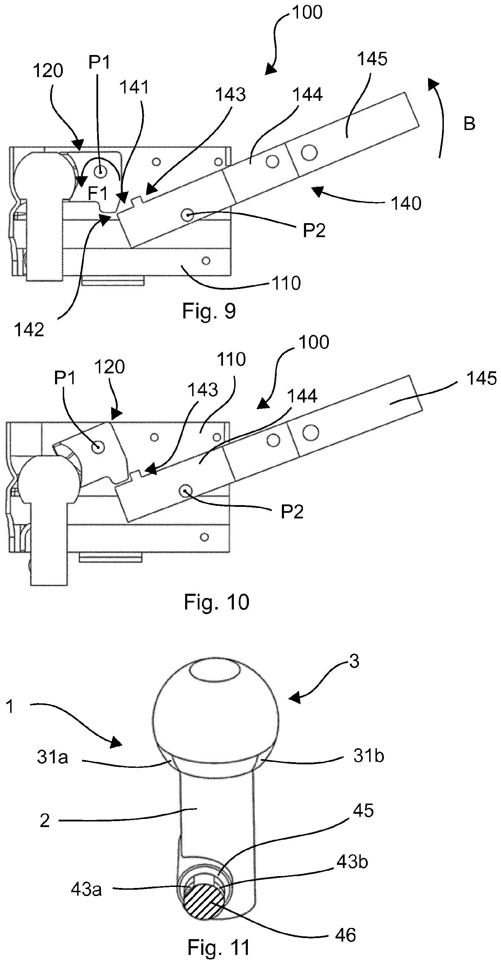

As is shown in Figure 9, the lever 144 comprises a contact portion consisting of a first contact portion 141, a second contact portion 142 and an abutment protrusion 143 that are all provided for contacting specific portions of the receiving portion 120. With respect to the pivot axis P2 of the lever 144, the contact portion and the gripping portion 145 are arranged on opposite sides of the lever 144. In the configuration, the first contact portion 141 is a substantially flat surface which extends in a plane which is parallel to the pivot axis P2 and parallel to the longitudinal direction of the lever 144. The second contact portion 142 is embodied as a rounded edge extending substantially parallel to the pivot axis P2. The first contact portion 141 and the second contact portion 142 are configured such that the surfaces smoothly merge with each other. The abutment protrusion 143 extends substantially perpendicular to the first contact portion 141, that is substantially perpendicular to a longitudinal extension direction of the lever 144. With the above configurations of the lever 144 and of the receiving portion 120, it is possible to hold the receiving portion 120 in an open state in which the second abutment portion 124 abuts and is urged against the abutment protrusion 143. In this way, a pivoting motion of the receiving portion 120 in counter-clockwise direction, that is in the direction of arrow F1, is blocked by the abutment protrusion 143. Since the lever 144 is prebiased and urged about the pivot axis P2 in the direction of arrow F2 or a clockwise direction, the contact portion in the front portion of the lever 144 is held in contact with the lower portion of the receiving portion 120. In this way, the receiving portion 120 is locked in the open state and is only movable in clockwise direction upon application of a force which exceeds a receiving portion pretensioning force acting in the direction of arrow F1. In the open state, a distance between the lower portion 125 of the receiving portion 120 and the protrusion 113 of the housing 110 is large enough to pass the ball head between them.

Figure 5 shows a pre-mounting state of the load carrier coupling 100 in which the load carrier coupling 100 is placed above the trailer coupling. More precisely, the load carrier coupling 100 is positioned such that the load carrier coupling 100 can be inserted on the trailer coupling 1 with a movement in vertical direction.

Figure 6 shows an intermediate state in which the load carrier coupling 100 was already lowered onto the trailer coupling 1 such that the ball head 3 is already positioned in the accommodating space 115. In this state, the upper portion 32 of the ball head 3 is at a position where it has already passed the supporting section 111 and contacts an upper portion of the inner surface 122 of the receiving portion 120. When the ball head 3 is in contact with the inner surface 122 of the receiving portion 120, a movement of the load carrier coupling 100 relative to the trailer coupling 1 in downward direction leads to an application of a pushing force on the inner surface 122 by the ball head 3. The application of such a pushing force is high enough to rotate the receiving portion 120 in a clockwise direction about the pivot axis P1 and against the above-mentioned receiving portion pretensioning force acting in the direction of arrow F1. Upon moving the receiving portion 120 in this way, the second abutment portion 124 gets out of contact with the abutment protrusion 143 and the lower portion of the receiving portion 120 slides along the first contact portion 141 towards the forward end of the lever 144, more precisely towards the second contact portion 142. When the receiving portion 120 is moved further in the clockwise direction, the lower portion of the receiving portion 120 slides along the first contact portion 141 until the bridging portion 126 passes the second contact portion 142 which, as described above, is provided in the form of an edge of the lever 144. As soon as the bridging portion 126 has passed, the second contact portion 142, the second contact portion 142 gets in contact with the second abutment portion 124. As soon as this is the case, the lever 144 exerts a pushing force on the second abutment portion 124 which leads to a movement of the receiving portion 120 against the receiving portion pretensioning force acting in the direction of arrow F1. Accordingly, the receiving portion 120 is actively pushed in a clockwise direction by the lever 144. In this way, a pushing force is applied on the lower portion 31 of the ball neck 3 by a lower portion of the inner surface 122. Therefore, the load carrier coupling 100 is actively pushed downwards. Due to this, the supporting portion 130 is pushed onto an upper portion 43 of the support protrusion 4.

The state as shown in Figure 7 is also referred to as engaging state as the ball head is fixedly locked between the supporting section 111 and the receiving portion 120. Since the second contact portion 142 is in contact with the second abutment portion 124 and since the lever 144 is urged about the pivot axis P2 in the direction of arrow F2 by a locking member pretensioning force, the movement of the receiving portion 120 in the counter-clockwise direction is actively prevented unless a user moves the lever in counter-clockwise direction. With this configuration, a self-locking function of the load carrier coupling 100 is realized. The self-locking function is effected since the lever 144 automatically moves in the direction of arrow A when the bridging portion 126 has passed the second contact portion 142. Accordingly, tightening of the load coupling carrier is possible without an application of a force or with the application of only low force by the user. In order to release the engaging state, a user has to move the lever 144 in the direction as indicated with arrow B in Figure 9. When the lever 144 is rotated in counter-clockwise direction about the pivot axis P2, the second contact portion 142 gets out of contact with the second abutment portion 124. Accordingly, the receiving portion 120 is now free to move in the counter-clockwise direction and the movement of the receiving portion 120 is only limited by the ball head 3 still inserted in the load carrier coupling 100. In order to fixate the lever 144 in the engaging state, a locking lever 146 can be provided on the lever 144 as is shown in Figures 1 and 5. The locking lever 146 is pivotably mounted on the lever 144 and is configured to engage with the housing 110 in order to block a movement of the lever 144. The locking lever 146 can be prebiased by an urging member such as a spring so as to normally engage with the housing 110 as soon as the lever 144 is in the engaging state or position. The locking lever 146 can comprise a latching portion which engages with an edge of an opening provided in the housing 110.

When the load carrier coupling 100 is moved in the upward direction, the ball head 3 is pulled out of the accommodating space with a corresponding movement of the receiving portion 120. A rotation of the receiving portion 120 is possible until the same abuts with the abutment protrusion 143 provided on the lever 144 as can be seen in Figure 10. In the above-described manner, the receiving portion 120 can be brought into the engaging state and the open state and the lever 144 is able to lock the receiving portion 120 in the respective states.

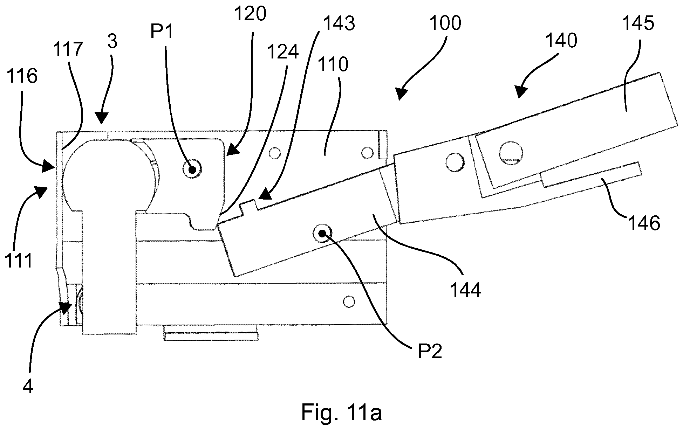

Figure 11 shows the sections of the trailer coupling 1 that are in contact with the load carrier coupling 100 when the same is fixedly mounted on the trailer coupling 1. Due to the above configuration of the present configuration, the ball head 3 is only contacted at two contact sections 31a, 31b by the support surface 114 and the inner surface 122. The supporting portion 130 contacts the upper portion 43 of the support protrusion 4 at two contact section 43a, 43b that are spaced from each other due to the presence of the recess 135. The end surfaces 46 of the support protrusions 4 can get in contact with the inner surface of the side walls 112 respectively during inserting the support protrusions 4 into the supporting portions 130. Accordingly, the end surfaces 46 have a guiding function for positioning the load carrier coupling 100 on the trailer coupling 1.

Figure 11a shows a modification of the load carrier coupling described above. The load carrier coupling 100 shown in Figure 11a differs from the above described load carrier coupling in that the protrusion 113 and the support surface 114 on the protrusion 113 are omitted. The inner surface 117 extends along the entire supporting section 111 so that the ball head 3 is in contact therewith only at a side portion of the same. The inner surface 117, i.e. a supporting surface of the ball head, is defined by substantially parallel straight lines which preferably extend in substantially vertical direction when the load carrier coupling is mounted on the trailer coupling. The supporting section 111 formed in this way is configured to contact a middle section of the ball head 3 at which the upper and the lower portion of the ball head 3 meet. Accordingly, the supporting section 111 is configured to get in line contact with the outer surface of the ball head. The housing does not comprise a section that allows a clamping between the receiving member and the supporting section 111 of the housing on diagonally opposite portions of the ball head. Accordingly, the housing is formed such that a movement of the load carrier coupling towards the support protrusions is not blocked by an element of the housing. In other words, the housing 110 is configured such that the housing is not supported by an upper portion of the ball head when the load carrier coupling is fully inserted on the trailer coupling.

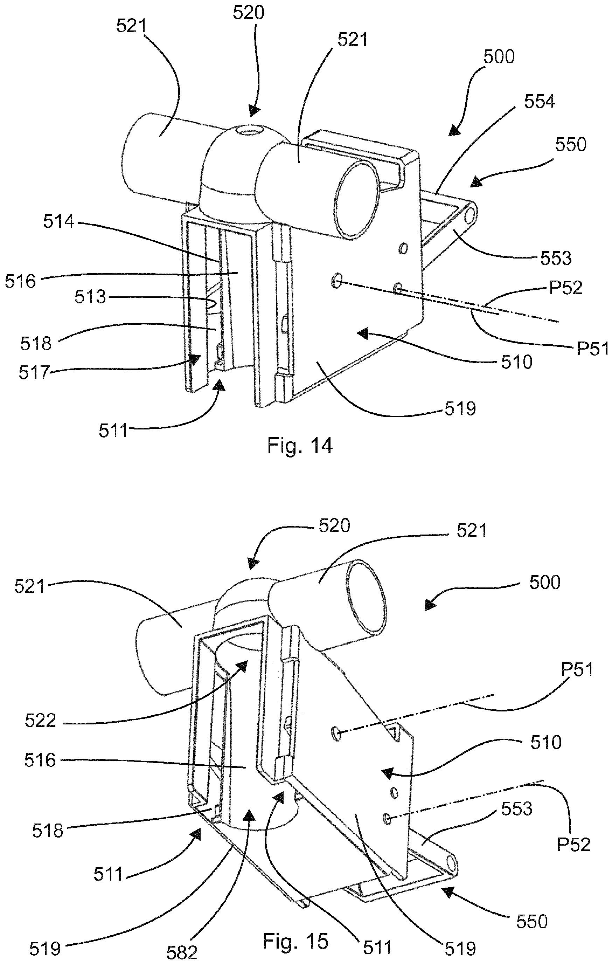

A load carrier coupling 500 according to the second example will be described with reference to Figures 14 to 28. The load carrier coupling 500 comprises a housing 510, a receiving portion 520 provided at a forward upper end of the housing 510 and a locking mechanism 550. In the present configuration, the receiving portion 520 is integrally formed with the housing 510. Coupling portions 521 are shown as being fixedly coupled to the receiving portion 520. The coupling portions 521 can be portions for fixing the load carrier coupling 500 to further elements such as a supporting structure of a load carrier such as a bike carrier. The receiving portion 520 comprises an accommodating space for accommodating a coupling body 3 embodied as a ball head of the trailer coupling 1. The receiving portion 520 comprises an inner surface which comprises a bowl-like shape and is configured to get in contact with an upper portion 31 of the ball head 3.

On the lower portion of the load carrier coupling 500, an insertion opening 582 is provided into which the ball head 3 of the trailer coupling 1 can be inserted. Accordingly, the load carrier coupling 500 is configured to be inserted on the trailer coupling from above. In order to guide the ball head 3 inserted into the insertion opening 582 towards the accommodating space 522, a guiding surface 516 is provided ranging from the edge of the insertion opening 582 to the inner surface of the receiving portion 520. The guiding surface 516 is curved corresponding to the outer contour of the ball head 3.

The housing 510 further comprises side walls 519. The side walls 519 are arranged substantially parallel with respect to each other and the guiding surface 516 as well as the insertion opening 582 are arranged between the side walls 519. Insertion recesses 511 for accommodating the support protrusion 4 or cylindrical pin 41 therein are provided in the side walls 519. The insertion recesses 511 extend from the lower end of the load carrier coupling 500, more precisely from the lower end of the side walls 519 towards an upper end of the housing 510. The insertion recesses 511 form guiding sections 517 for guiding the cylindrical pin 41 of the trailer coupling 1. Each guiding section is limited by walls 514 and 513 facing each other as well as by a guiding surface 518 which is a portion of an inner surface of the side walls 519. Each guiding surface 518 is configured to provide an abutment for an end surface 46 of the cylindrical pin 41. The walls 513, 514 are configured to get in contact with the lateral surface 44 of the support protrusion or cylindrical pin 41. Accordingly, as soon as the cylindrical pin 41 is inserted into the insertion recess 511, a movement of the load carrier coupling 500 is only possible in the longitudinal extension direction of the insertion recess 511, that is in the vertical direction when the load carrier coupling 500 is mounted on the trailer coupling 1 on a vehicle.

The locking mechanism 550 comprises a lever 553 and a handle 554 coupled to the lever 553. The handle 554 is configured to be grasped and operated by a user in order to release an engagement of the load carrier coupling 500 with the trailer coupling 1.

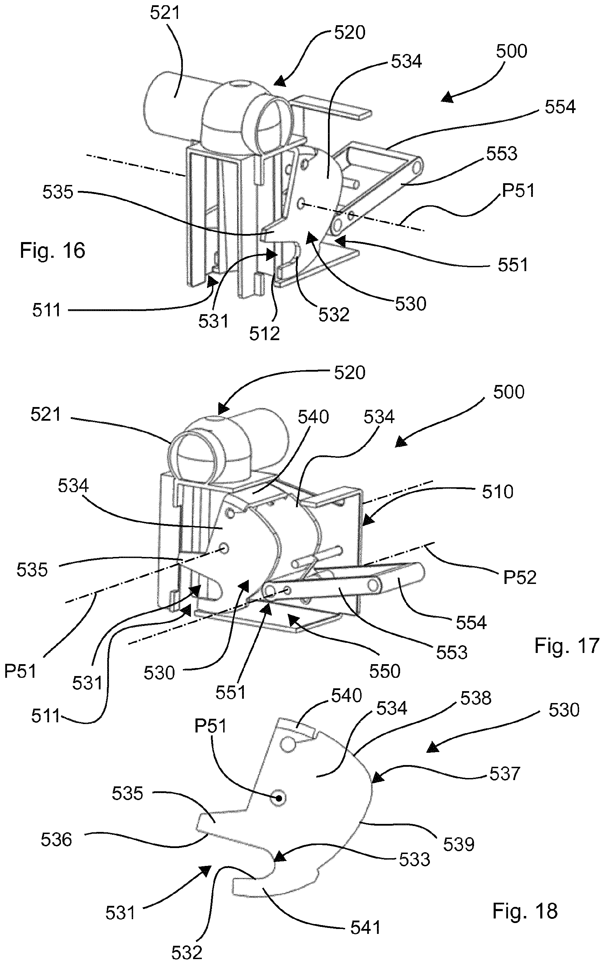

In Figures 16 and 17, an interior configuration of the load carrier coupling 500 is visible. A supporting portion 530, also referred to as supporting member, is arranged in the housing 510 pivotably about a pivot axis P51. The supporting portion 530 comprises two plates 534 which are arranged parallel with respect to each other at a predetermined distance, more precisely such that they are arranged on lateral outward sides of the insertion recesses 511. The plates 534 are pivotably coupled to the housing 510 by means of pivot pins (not shown) and are furthermore coupled to each other by means of a bridging portion 540 which will also be referred to as abutment section due to its function which will be described later.

The configuration of the plates 534 is shown in Figure 18 in greater detail. The plates 534 of the supporting portion 530 comprise a recess 531 for accommodating the cylindrical pin 41. Thus, the portion of the supporting portion 530 in which the recess 531 is provided can also be referred to as engaging section of the supporting portion 530. The recess is formed between a force receiving portion 535 and a lower contact portion 541. In the configuration, the force receiving portion 535 is a protrusion. The recess 531 comprises an inner surface 532 ranging from the force receiving portion 533 via a bottom portion 533 of the recess 531 to an inner surface of the lower contact portion 541. The surface of the force receiving portion 535 joining the inner surface of the recess 531 can also be referred to as sliding surface 536.

Besides the above-described engaging section in which the recess 531 is provided, the supporting portion 530 further comprises an operating section which is provided for affecting a movability of the supporting portion 530 in the housing 510. The operating section comprises a cam surface 537 which is formed on each lateral outer side of the plates 534. The cam surface 537 comprises a first surface area 538 and a second surface area 539. In the present configuration, both surface areas 538 and 539 are curved and smoothly join at an intermediate section. The cam surface 537 is configured to receive a pushing force applied thereon by the locking mechanism 550.

As already mentioned above, the locking mechanism 550 comprises a lever 553 and a handle 554. The lever 553 is mounted to the housing 510 pivotably movable about a pivot axis P52. The handle 554 is arranged at a first end portion of the lever 553 and a force application member 551 is provided at the opposite second end portion of the lever 553. In the configuration, the lever 553 is formed by means of two elongate plates that are arranged at a distance with respect to each other. The force application member 551 is a cylindrical element which couples the plate members at the second end portion of the lever 553. The handle 554 is also arranged between the plate portions at the first end portion of the lever 553. The lever 553 is pretensioned by means of an urging member 552 embodied as a spring. More precisely, the lever 553 is pretensioned such that its forward end portion with the force application member 551 is urged in clockwise direction in the drawings. Accordingly, the force application member 551 is normally pushed on the cam surface 537 of the supporting portion 530. In other words, the force application member 551 can only get out of contact with the cam surface 537 when a user operates the lever 553 by grasping the handle 554 and moving the lever 553 against the force of the urging member 552 in counter-clockwise direction in the drawings. An interaction between the lever and the specifically designed cam surface 537 generate different urging forces or moments acting on the receiving portion 520 and urging the same either in clockwise or in counter-clockwise direction.

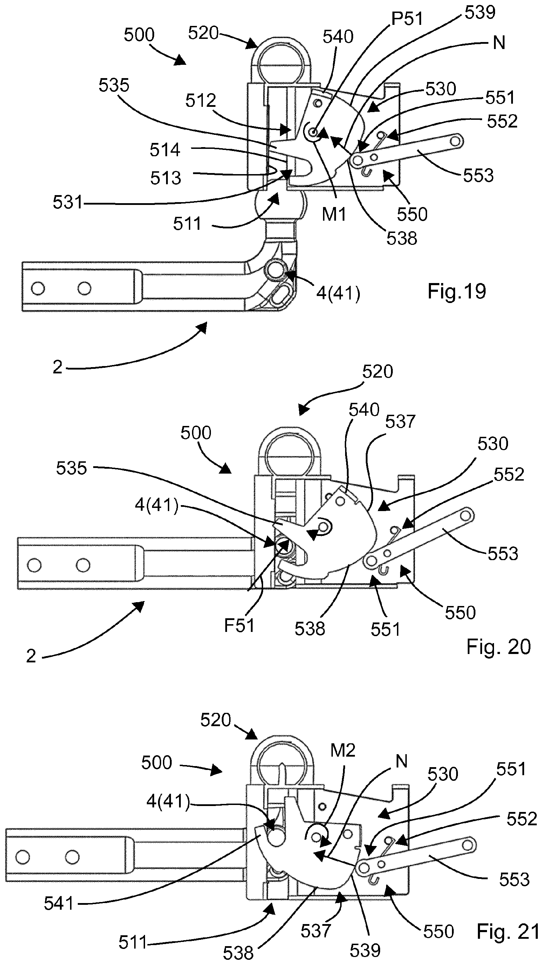

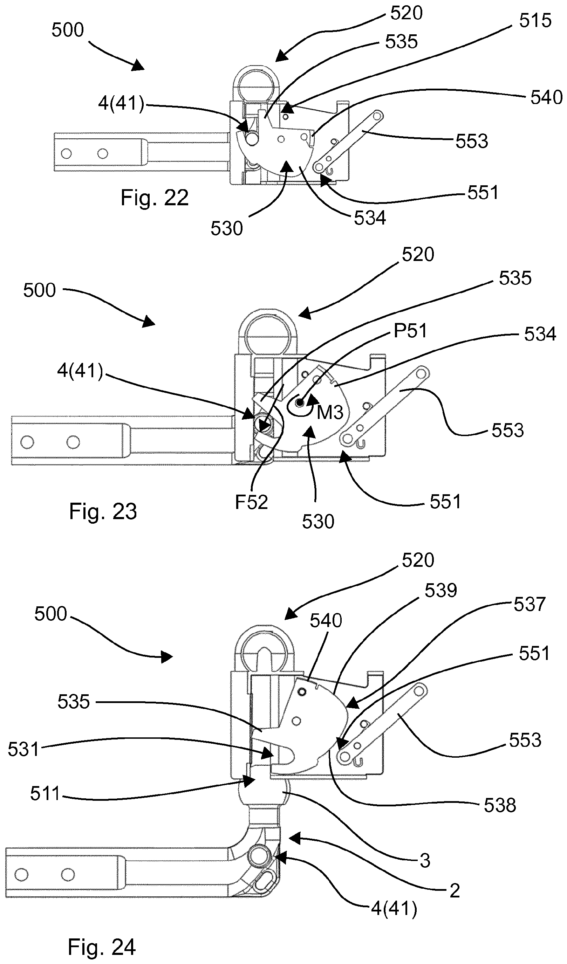

The supporting portion 530 is movable between an open state and an engaging state. The open state is shown in Figure 19. In this state, the above-described abutment section 540 is in contact with a contact portion 515 (shown in Fig. 22) of the housing 510. In this way, a further movement of the receiving portion 520 in counter-clockwise direction is prevented. In order that the receiving portion 520 is securely held in the open state, the force application member 551 contact the first surface area 538 of the cam surface 537. As is shown in Figure 19, the first surface area 538 comprises a shape such that a normal force N applied on the first surface area 538 acts in a direction which passes the pivot axis P51 on the upper side. In this way, a moment M1 is generated in counter-clockwise direction about the pivot axis P51 so that the receiving portion 520 is urged in counter-clockwise direction.

As is also shown in Figure 19, the force receiving portion 535 of the receiving portion 520 is positioned besides the insertion recess 511 such that an insertion of the cylindrical pin 41 into the insertion recess 511 leads to a contact between the cylindrical pin 41 and the force receiving portion 535. Thus, when the load carrier coupling 500 is inserted on the trailer coupling 1, the support protrusion 4 in the form of a cylindrical pin 41, more precisely the lateral surface 44 of the cylindrical pin 41 gets in contact with the above-described sliding surface 536 of the force receiving portion. As soon as such a contact is established, a further insertion of the load carrier coupling 500 onto the trailer coupling 1 in downward direction leads to an application of a pushing force F51 acting on the force receiving portion 535 which leads to a movement of the receiving portion 520 in clockwise direction. Figure 20 shows a state, in which the cylindrical pin 41 already applied a pushing force F51 on the force receiving portion and in particular a state in which the receiving portion 520 was already rotated in clockwise direction to a certain extent.

As is also visible from Figure 20, the recess 531 approaches the cylindrical pin 41 from below due to the rotation of the receiving portion 520. When the load carrier coupling 500 is further lowered onto the trailer coupling 1, the state as shown in Figure 21 is reached. In this state, the ball head 3 contacts the inner surface of the receiving portion 520 and is thus supported on the ball head 3. In this state, the supporting portion 530 is rotated into an engaging state in which the recess 531 is brought into a position in which the cylindrical pin 41 is accommodated in the recess 531 and in contact with the inner surface 532 of the recess 531. In this connection it is noted that the recess 531 comprises a shape such that the cylindrical pin 41 accommodated therein is contacted at two contact sections which are spaced from each other.

As can be gathered from Figure 21, the second surface area 539 of the cam surface 537 is configured such that a normal force applied on the second surface area 539 by the force application member 551 passes the pivot axis P51 on lower side thereof so that a moment in the direction of arrow M2 is generated on the supporting portion 530. Accordingly, the normal force N now applied on the second surface area 539 urges the supporting portion 530 in clockwise direction so that the supporting portion 530 exerts a pushing force on the cylindrical pin 41. The locking mechanism 550 and the cam surface 537 are configured such that the normal force applied on the cam surface 537 in the engaging state is high enough to prevent a movement of the load carrier coupling 500 in the upward direction or disengaging direction from the trailer coupling 1. Accordingly, the load carrier coupling 500 is securely fixed on the trailer coupling 1 when the supporting portion 530 is in the engaging state. Due to the above-described configuration of the cam surface 537, the force application member 551 is able to ride on the cam surface 537 during the movement of the supporting portion 530 from the open state into the engaging state. Therefore, the supporting portion 530 is automatically locked in the engaging state. In other words, no further action is necessary for locking the supporting portion 530 in the engaging state. Accordingly, the mechanism has a self-locking capability so that tightening of the load carrier coupling is possible without the application of a force of a user.

In order to dismount the load carrier coupling 500 from the trailer coupling 1, the user simply has to move the lever 553 in counter-clockwise direction into a release position in which the force application member 551 is out of contact with the cam surface 537 as is shown in Figure 22. If this is the case, the supporting portion 530 is free to be moved towards the open state in counter-clockwise direction in Figure 22 by a movement of the cylindrical pin 41.

Figure 23 shows a state in which the load carrier coupling 500 has already been slightly moved in the upward direction. The cylindrical pin 41 contacts the lower contact portion 541 of the supporting portion 530 and applies a force F52 on the same. This force induces a rotation of the supporting portion 530 in counter-clockwise direction towards the open state. The open state is reached when the abutment section 540 contacts the contact portion 515. In this state, the lower contact portion 541 is brought out of the way of the cylindrical pin41 so that the load carrier coupling 500 can be disengaged from the trailer coupling 1. Furthermore, the user can now release the lever 553 which will again contact the cam surface and apply a pushing force on the first surface area 538 which keeps the supporting portion 530 in the open state.

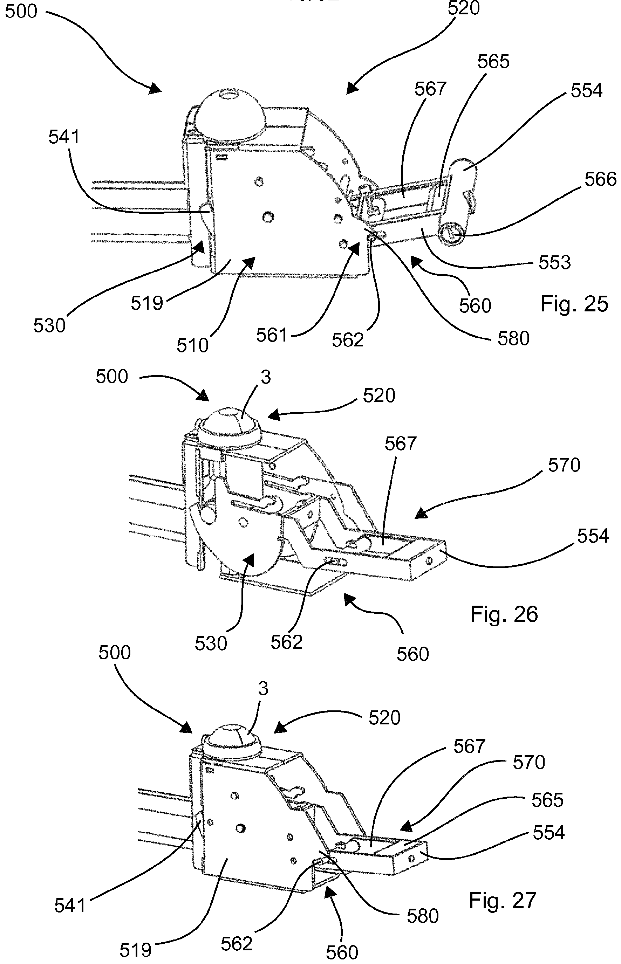

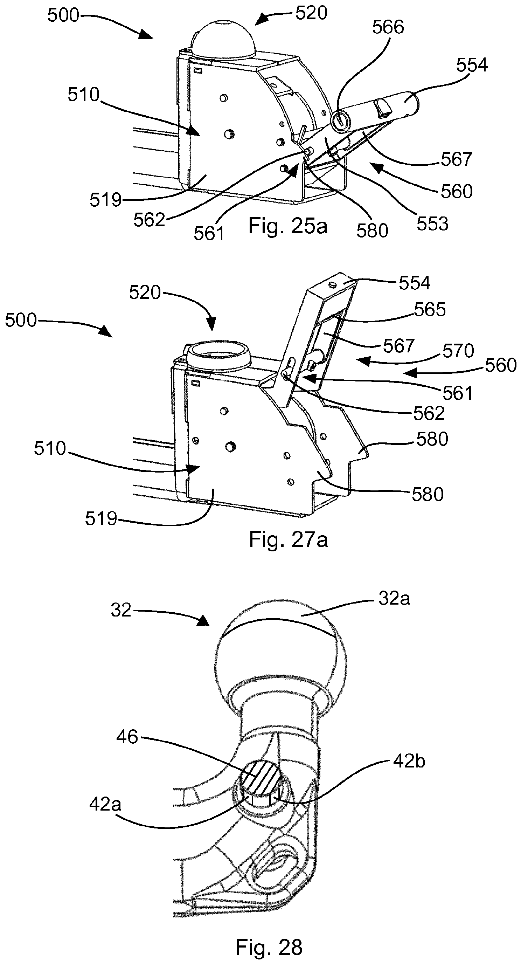

Figure 25 shows a slight modification of the load carrier coupling 500 as described above. In Figure 25, an additional locking mechanism 560 is shown. The locking mechanism 560 comprises an engaging member 561 embodied as a movable pin 562. The pin 562 is coupled to an operating member 565 via a link 567. The operating member 565 is mounted on the handle 554 so as to be movable in a radial direction of the handle 554. The operating member 565 is prebiased by a spring in locking direction of the pin 562. The pin 562 is guided in longitudinal slots provided in the plates of the lever 553. By squeezing the operating handle 554 and the operating member 565, the pin 562 is moved. As is also shown in Figure 25, the housing 510 comprises a contact portion 580 which is formed in the side wall 519. The contact portion 580 provides an abutment for the pin 562. Thus, when the lever 553 is in the position as shown in Figure 25 and the operating member 565 is not operated, a movement of the lever 553 in the upward direction is prevented by a contact between the pin 562 and the contact portion 580. When the operating member 565 is operated, the pin 562 is brought into a position in which it is able to pass the contact portion 580 and the lever 553 can be brought into the release position as shown in Fig. 25a.

A further modification of the load carrier coupling 500 is shown in Figures 26, 27 and 27a. Contrary to the above-described configuration and the modification, the locking mechanism 560 as shown comprises a lever 570 which is coupled to the supporting portion 530 so as to be integrally movable with the same. The remaining features of the locking mechanism 560 are the same as those of the modification as shown in Figures 25 and 25a. Thus, an operation of the lever 570 is directly transferred onto the supporting portion 530.

Figure 28 shows the portions on the trailer coupling 1 that are contacted by the load carrier coupling 500 according to the second example and its modifications. The ball head 3 is contacted at an upper portion 32 thereof at contact section 32a which is a spherical zone on the ball head 3. The cylindrical pin 41 is contacted at two contact sections 42a, 42b on the lower portion 42 of the cylindrical pin 41. The guiding surfaces 518 are positioned such that they face the end surfaces 46 of the cylindrical pins 41 when the load carrier coupling 500 is mounted on the trailer coupling 1. A contact between the end surfaces 46 and the guiding surfaces 518 can occur during use of the load carrier coupling 500, in particular during driving the vehicle on which the trailer coupling 1 with the load carrier coupling 500 is provided.

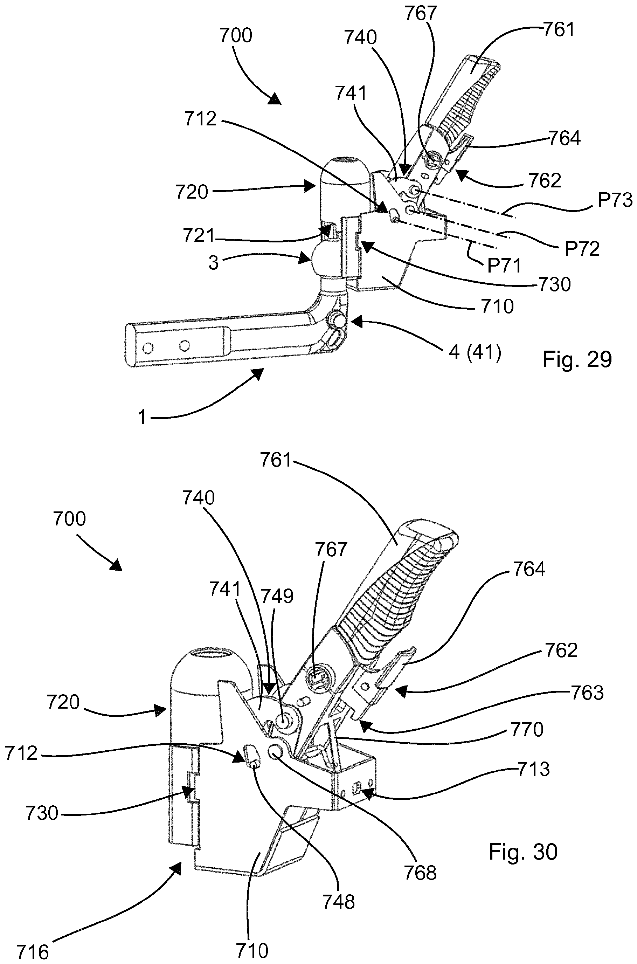

A configuration as well as modifications of a load carrier coupling according to the third example will be described with reference to Figures 29 to 38. The load carrier coupling 700 according to the third example comprises a housing 710, a receiving portion 720, a supporting portion 730 and an engaging member 740.

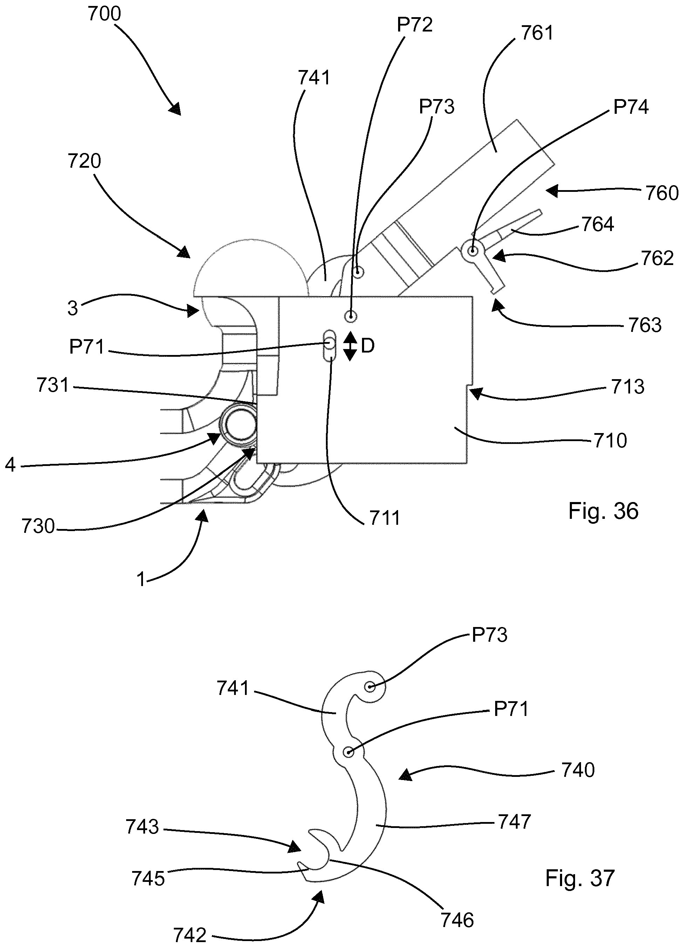

The housing 710 comprises a guiding recess 712. In the configuration as shown in Figures 29 to 35, the guiding recess 712 is an opening comprising five rounded corners with substantially straight portions between the rounded corners. According to a modification as shown in Figure 36, the guiding recess 711 can also be a substantially vertical elongate slot. The guiding recess 712 is configured to accommodate a pivot P71 which is embodied as a pivot pin 748 coupled to the engaging member 740. In this way, the engaging member 740 is pivotably supported in the guiding recess 712. More precisely, each guiding recess 712 supports the pivot pin 748 such that the same can move rotatably and translatory. The housing 710 further comprises an engaging recess 713 which is configured to cooperate with a locking mechanism 762 that will be described later.

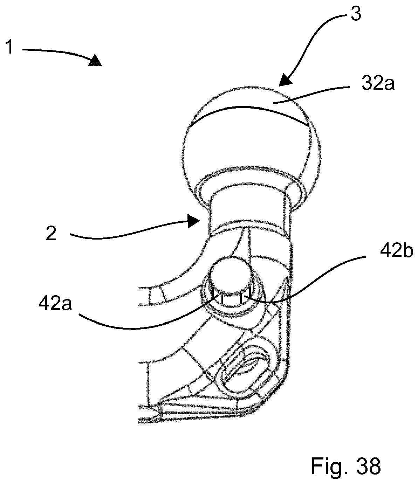

The load carrier coupling 700 further comprises the above-mentioned receiving portion 720 which is provided on the housing 710 at an upper portion of the housing 710. The receiving portion 720 is configured to accommodate a portion of the coupling body 3. The coupling body 3 is embodied as a ball head. The receiving portion 720 comprises an accommodating section 721 forming an accommodating space for receiving the ball head 3. The accommodating section 721 is formed such that the receiving portion 720 can get in contact with a spherical zone of the ball head 3. When the load carrier coupling 700 is mounted on the trailer coupling 1 or is inserted thereon, the receiving portion 720 contacts a ring-like outer surface 32a on the upper portion of the ball head 3 as is shown in Fig. 38.

The housing 710 further comprises the supporting portion 730. The supporting portion 730 comprises an abutment surface 731 for an abutment with the support protrusion 4 or cylindrical pin 41. In the present configuration, the abutment surface 731 defines a substantially straight abutment surface which extends in vertical direction when the load carrier coupling 700 is mounted or inserted on the trailer coupling 1. The purpose of the abutment surface 731 is to contact the support protrusion 4 in order to prevent a rotation of the load carrier coupling 700 about the trailer coupling 1 when the same is inserted on the trailer coupling 1 and to provide a counter surface for the support protrusion 4 when a tightening force is applied on the same.

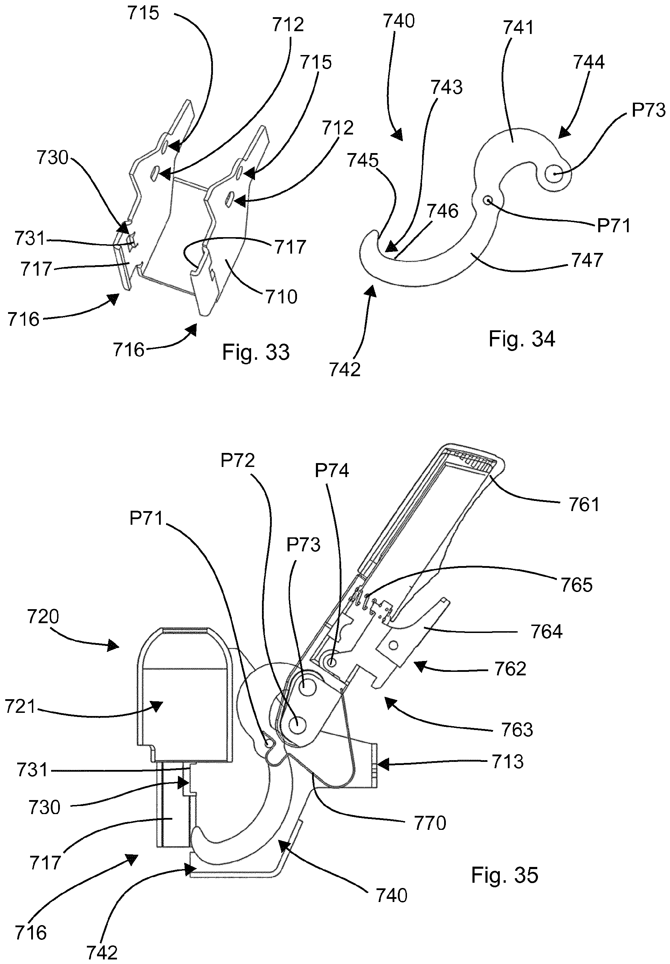

An example of a construction of the housing 710 is shown in Figure 33. Besides the above-described features of the housing 710, the housing further defines bearing openings 715 and guiding sections 716 each of which comprising a guiding surface 717. The guiding surfaces 717 are provided so as to face each other and are configured so as to provide an abutment for end surfaces 46 of the support protrusion 4. The guiding surfaces 717 and the abutment surfaces 731 are arranged such that the abutment surfaces 731 can get in contact with a lateral outer surface 44 of the support protrusion 4 as shown in Figures 12 and 13. The abutment surfaces 731 and the guiding section 716 are formed in side walls of the housing 710. The side walls are formed form a sheet metal by cutting and bending.

The load carrier coupling 700 further comprises an engaging member 740 which is adapted to engage with the support protrusion 4 and to apply a tightening force on the support protrusion 4 by a movement including a pivoting movement and a translatory movement. The engaging member 740 is arranged pivotably and slidably moveable in the guiding recess 712. The pivot pin 748 is also referred to as pivot P71 in the following. The construction of the engaging member 740 is shown in Figure 34 in greater detail. The engaging member 740 is a plate-like lever 741 which can be formed from a sheet metal by cutting for instance. The lever 741 is a substantially flat member which comprises a meandering shape.

The lever 741 comprises an engaging portion 742 which is configured to engage with the support protrusion 4. The engaging portion 742 comprises a hook-like section defining a recess 743 with a curved inner surface having a first contact area 745 and a second contact area 746 which contact the support protrusion 4 at two different contact sections. The first contact area 745 and the second contact area 746 are spaced from each other on the inner surface of the recess 743. The engaging portion 742 is coupled to a pivot portion of the lever 741 by means of a deformation portion 747. At the pivot portion, the lever 741 comprises the pivot P71 for supporting the lever 741 in the guiding recess 712 or the guiding recess 711. The deformation portion 747 is configured to be flexible in longitudinal direction of the engaging member 740. Accordingly, a distance between the recess 743 and the pivot P71 can increase by a deformation of the deformation portion 747 when a tensile load is applied on the engaging member 740. As is shown in Figure 34, the deformation portion comprises a curved shape.

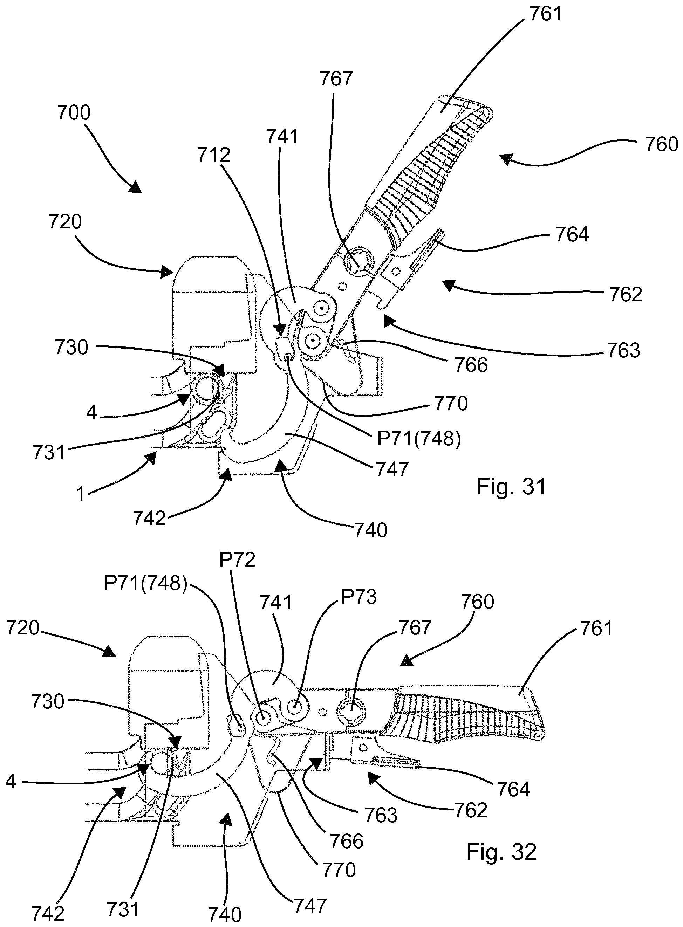

The engaging member 740 further comprises a coupling portion 744 which comprises a pivot P73. By means of the pivot P73, the engaging member 740 is coupled to an operating member 760 which is embodied as an operating lever. The operating lever 760 is configured for operating the engaging member 740. The operating lever 760 is pivotably movable about a pivot P72 which is supported in the above-described bearing opening 715. Accordingly, the operating lever 760 is pivotably held on the housing 710. The operating lever 760 and the engaging member 740 form a knee joint mechanism. As is shown in Figure 29, the operating lever 760 and the engaging member 740 are pivotable about parallel pivot axes that are referenced with the reference signs relating to the corresponding pivot pins or pivots P71, P72 and P73. In the construction as shown in Figures 29 to 35, the pivot P72 is located between the pivot P71 and the pivot P73 in such a manner that the lever 760 can be brought into an over-center position in which a connection line between the pivots P71 and P73 is located below pivot P72. Such an over-center position is possible due to the presence of the deformation portion 747. The over-center position in which the mechanism is self-locked is shown in Figure 32.

In order to provide an additional safety feature, the load carrier coupling 700 comprises a locking mechanism 762 which comprises a latching portion 763 which is embodied as a hook that is configured to engage with the engaging recess 713 formed in the housing 710. The locking mechanism 762 is embodied as a lever which comprises an operating portion 764 and which is arranged pivotable about a pivot P74. The pivot P74 is formed by a pivot pin which is rotatably held in the operating lever 760, more precisely near a handle portion 761 which is configured to be grasped by a user for operating the operating lever 760. The locking mechanism 762 is prebiased by an urging member 765 embodied as a spring so as to seek an engaging state in which the latching portion 763 or hook is urged towards an engagement with the engaging recess 713. Accordingly, when the operating lever 760 is brought into a tightening state as shown in Figure 32, the latching portion 763 will remain in engagement with the engaging recess 713 unless the operating portion 764 is operated.

In order to lock a movement of the locking mechanism 762, a further locking mechanism 767 can be provided for locking a movement of the locking mechanism 762, more precisely the lever of the locking mechanism 762. This additional locking mechanism 767 can be a mechanism which can be operable by means of a key.

A mounting procedure of the load carrier coupling 700 on a trailer coupling 1 will be described with reference to Figures 29, 31 and 32. As is shown in Figure 29, the load carrier coupling 700 is in a first step arranged above the trailer coupling 1, more precisely above the ball head 3. The trailer coupling 700 is then moved downwards onto the trailer coupling 1 until the ball head 3 gets into contact with the receiving portion 720, more precisely with an inner surface of the accommodating section 721 which gets in contact with an upper portion or spherical zone of the ball head 3. The state in which the ball head 3 is received in the receiving portion 720 is shown in Figure 31. In this state, the load carrier coupling is held in a defined position although it is not tightened in this state.

In order to fixedly secure the load carrier coupling 700 on the trailer coupling 1, the operating lever 760 is moved downwards into a locking state as is shown in Figure 32. Due to this movement of the operating lever 760, the above-described shape of the guiding recess 712 and the specific fixation of the engaging member 740 on the housing 710 and the operating lever 760, the lever 741 is moved so as to perform a pivoting movement as well as a translatory movement which are superimposed. More precisely, the pivot pin 748 is moved along a side surface of the guiding recess 712 from the position as shown in Figure 31 to the position as shown in Figure 32. In the shown configuration, the pivot pin 748 is moved slidingly along the inner surface of the guiding recess 712 in clockwise direction. The inner surface of the guiding recess 712 is formed such that in a first section of the movement of the pivot pin 748, the engaging portion 742 is brought behind the support protrusion 4 whereas in the next section of the movement a tightening force is generated by guiding the pivot pin 748 such that a tensile force is generated in the engaging member 740 in order to pull the support protrusion 4 towards the above-described supporting portion 730, more precisely to push the same against the abutment portion 731. Due to this construction, the support protrusion 4 is fixedly held between the engaging portion 742 and the abutment portion 731. The mechanism has such a configuration that the support protrusion 4 is not only urged towards the abutment portion 731 but also urged towards the receiving portion 720 so that an upper inner surface of the receiving portion 720 is pushed against the ball head 3 thereby fixedly clamping the load carrier coupling 700 to the trailer coupling 1.

In order to move the pivot pin 748, more precisely the pivot P71 along the inner surface of the guiding recess 712, the load carrier coupling 700 comprises an urging member 770 which is embodied as a spring element which is shown in detail in Figure 35. An end portion of the urging member 770 is fixedly coupled to the operating lever 760 at a lower portion thereof. A free end of the urging member 770 is in contact with the pivot P71 such that a movement of the lever 760 leads to a movement of the pivot P71 in the guiding recess 712. In this way, it is secured that the pivot P71 performs the desired movement upon operation of the operating lever 760 so that the engaging portion 742 is brought into the positions as needed for tightening the load carrier coupling 700.

A modification of the load carrier coupling 700 is shown in Figured 36 and 37. The modification mainly differs from the above-described configuration in that the guiding recess 711 is provided as a straight slot which is arranged in substantially vertical direction of the load carrier coupling 700 when the same is mounted on the trailer coupling 1. The modification also differs from the above-described configuration in the shape of the engaging member 740 which comprises an engaging portion 742 with a fork-like shape. The function is essentially the same as described above. Due to the formation of the guiding recess 711 as a straight slot, the pivot P71 is movable in vertical direction and rotatable. This construction also allows a movement of the engaging member 740 in order to bring the engaging portion 742 into engagement with the support protrusion 4.

In Figure 38, the areas on the trailer coupling 1 that are contacted by the load carrier coupling 700 when the same is mounted on the trailer coupling 1 are shown. The support protrusion 4 is contacted at the lower portion, more precisely at two contact sections 42a and 42b. The ball head 3 is contacted on its upper portion depending on the formation of the inner surface of the receiving portion 720. In the present configuration, the ball head 3 is contacted at spherical zone 32a on the upper portion of the ball head 3.

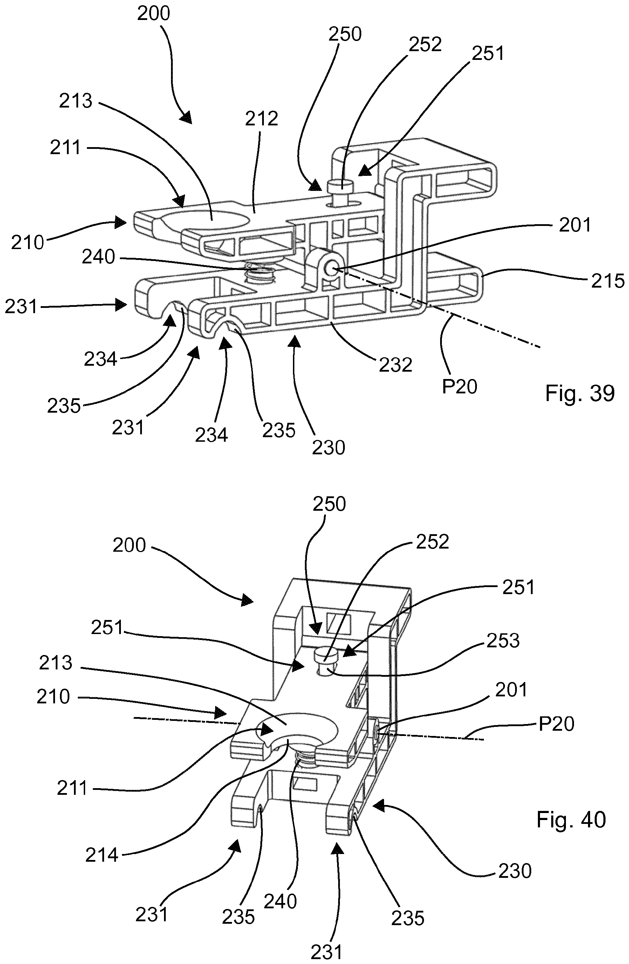

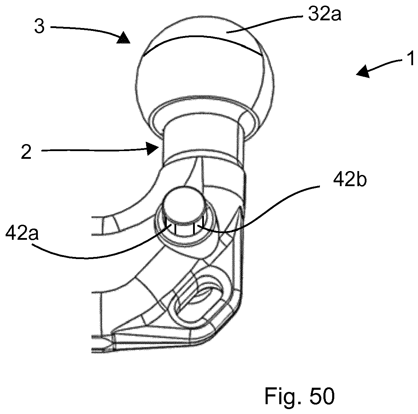

Embodiments as well as modifications of a load carrier coupling according to the aspect will be described with reference to Figures 39 to 57. Each load carrier coupling is configured to be used in connection with the above described trailer coupling 1 as mentioned in connection with the other examples.

Each embodiment of a load carrier coupling 200, 300, 400 according to the aspect comprises a receiving portion 210, 310, 410 and a supporting portion 230, 330, 430. Each receiving portion 210, 310, 410 comprises an accommodating section 211, 311, 411 configured to accommodate a portion of the coupling body 3. The coupling body can be a coupling body as described above with respect to the other concepts and can be a ball head. Each supporting portion 230, 330, 430 comprises an engaging section 231, 331, 431 which is configured to contact a support protrusion 4, a cylindrical pin 41 in the present embodiments. The receiving portions 210, 310, 410 and the supporting portions 230, 330, 430 are pivotably coupled to each other by means of pivots 201, 301, 401 such that a distance between the accommodating sections 211, 311, 411 and the engaging sections 231, 331, 431 can be varied by pivoting the receiving portions or the supporting portions about the pivot 201, 301, 401 between an open state in which the distance between the accommodating section 211, 311, 411 and the engaging section 231, 331, 431 is such that the load carrier coupling 200, 300, 400 is insertable on the trailer coupling 1 and a closed state in which the distance is such that the load carrier coupling 200, 300, 400 inserted on the trailer coupling 1 cannot be removed from the trailer coupling 1. Accordingly, in the closed state the distance is greater or smaller than in the open state depending on the configuration of the load carrier coupling 200, 300, 400.

In each embodiment according to the aspect, the load carrier coupling 200, 300, 400 is configured such that in a condition in which the load carrier coupling 200, 300, 400 is mounted on the trailer coupling 1, the pivot 201, 301, 401 is located at a position which is vertically between the coupling body 3 and the support protrusion 4.

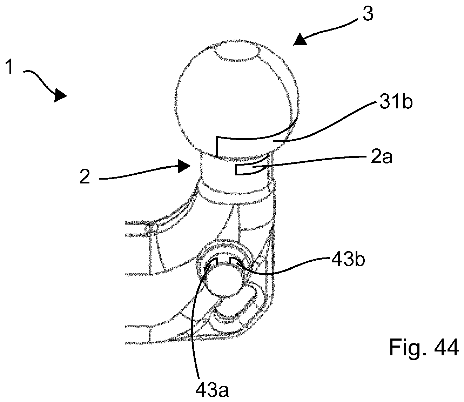

A first embodiment of a load carrier coupling according to the aspect will be described with reference to Figures 39 to 44. Besides the above-mentioned features that are common to all embodiments according to the aspect, the receiving portion 210 is a portion of a receiving member 212. The accommodating section 211 comprises a contact surface 213 that is oriented in the upward direction and is thus oriented away from the supporting portion 230. Accordingly, the contact surface 213 is configured to contact the coupling body or ball head 3 from below. As is shown in Figure 39 and Figure 40, the receiving portion 210 comprises a fork-like shape allowing to accommodate a portion of the neck of the trailer coupling 1 in a recess formed between two prongs of the receiving portion 210. The contact surface 213 continuously extends from one of the prongs to the other prong. Accordingly, the contact surface 213 can get in contact with an area 31b on the lower portion of the spherical surface of the ball head 3 as indicated in Figure 44. A side wall of the recess provided in the accommodating section 211 for accommodating a portion of the neck forms a neck contact surface 214 which is configured to contact a neck contact section 2a as shown in Figure 44.

The supporting portion 230 is a portion of a supporting member 232 and comprises engaging sections 231 which are configured to contact the support protrusion 4 or cylindrical pin 41. In the embodiment as shown in Figures 39 to 43 each engaging section 231 is configured to contact the support protrusion 4 from above. More precisely, the supporting portion 230 and the engaging section 231 are configured such that the support protrusion is contacted at its lateral surface 44 at two different contact sections 43a, 43b on the upper portion 43 of the support protrusion 4. The engaging sections 231 comprise recesses 234 each of which having contact surfaces 235. Each recess 234 and its contact surface 235 is formed such that the support protrusion 4 is contacted at two contact sections 43a, 43b which are spaced from each other along the lateral surface 44. The receiving member 212 and the supporting member 232 are hingedly coupled to each other by means of the pivot 201 such that the receiving member 212 is pivotable about a pivot axis P20 with respect to the supporting member 232. In the present embodiment, the receiving member 212 and the supporting member 232 are arranged in a scissor-like style in which the receiving members cross each other when viewed from the side. Furthermore, the receiving member 212 and the supporting member 232 are embodied as levers.

The load carrier coupling 200 further comprises an urging member 240 for applying an urging force on the supporting portion 230 and the receiving portion 210. The urging member 240 is arranged to urge the supporting portion 230 and the receiving portion 210 towards the closed state. In the embodiment, the urging member is a spring.

The load carrier coupling 200 further comprises a locking mechanism 250 for releasably locking a movement between the receiving portion 210 and the supporting portion 230 such that a movement towards the open state is blocked. The locking mechanism 250 comprises a tightening member 251 with an abutment portion 252. The position of the abutment portion 252 is variable by rotation of the tightening member 251 about its own longitudinal axis. The tightening member 251 comprises a link 253 which is threadedly engaged with the supporting member 232 so that a rotation of the same leads to a movement of the abutment portion with respect to the supporting member 232.

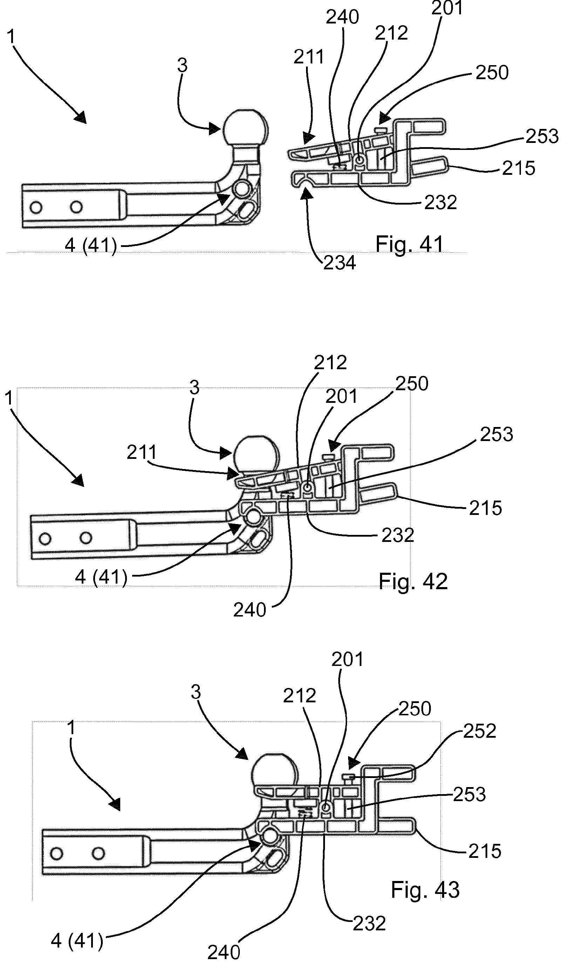

Figures 41 to 43 show a mounting process of the load carrier coupling. First, an operating portion 215 of the receiving member 212 is operated by a user in order to rotate the receiving portion 211 towards the supporting portion 230 as shown in Figure 41. In this state, it is possible to move the receiving portion 210 and the supporting portion 230 between the lower portion of the ball head 3 and the lateral surface 44 of the support protrusion 4 and to bring the supporting portion 230 in contact with the support protrusion 4 as shown in Figure 42. When the operating portion 215 is released, the receiving portion 211 is rotated away from the supporting portion 230 and contacts the ball head 3 from below as shown in Figure 43. After that, the locking mechanism 250 is operated such that the abutment portion 252 contacts the receiving member 212. In this way, a movement of the receiving portion 230 away from the ball head 3 is blocked und the load carrier coupling 200 is securely mounted on the trailer coupling 1.

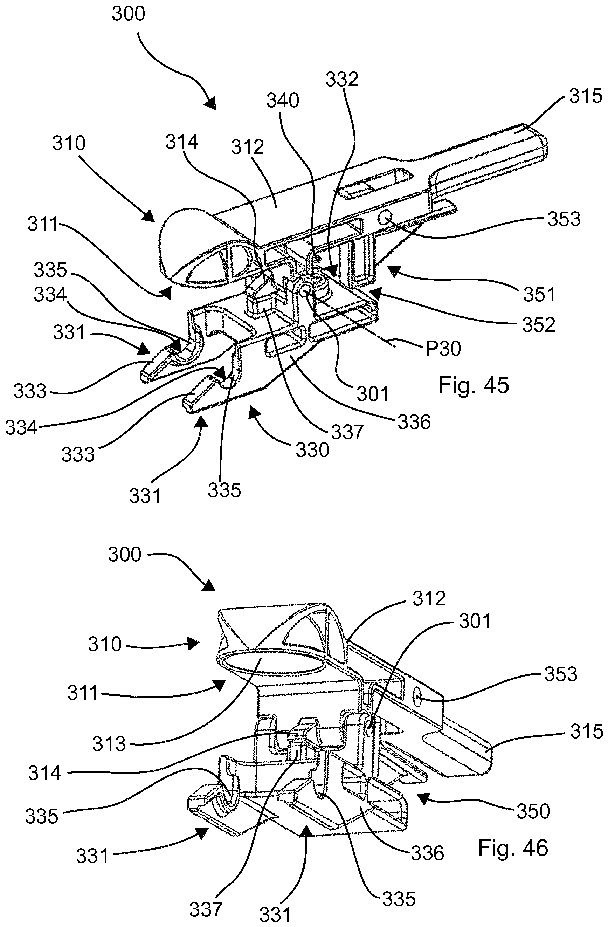

A second embodiment of a load carrier coupling according to the aspect will be described with reference to Figures 45 to 50. Besides the above-mentioned features that are common to all embodiments according to the aspect, the receiving portion 310 is a portion of a receiving member 312. The receiving portion 310 comprises an accommodating section 311 having a contact surface 313 that is oriented in the downward direction. Accordingly, the contact surface 313 is configured to contact the coupling body or ball head 3 from above. As is shown in Figure 45 and Figure 46, the receiving portion 310 comprises a bowl-like shape.

The supporting portion 330 is a portion of a supporting member 336 and comprises an engaging section 331 which is configured to contact the support protrusion 4 or cylindrical pin 41. In the second embodiment the engaging section 331 is configured to contact the support protrusion 4 from below. More precisely, the supporting portion 330 and the engaging section 331 are configured such that the support protrusion is contacted at its lateral surface 44 at two different contact sections 42a, 42b on the lower portion 42 of the support protrusion 4. The engaging sections 331 comprise recesses 334 each of which having contact surfaces 335. The recess 334 and its contact surface 335 are formed such that the support protrusion 4 is contacted at two contact sections 42a, 42b which are spaced from each other. The receiving member 312 and the supporting member 336 are hingedly coupled to each other by means of a pivot 301 such that the receiving member 312 is pivotable about a pivot axis P30 with respect to the supporting member 336. The receiving member 312 and the supporting member 336 are embodied as levers.

The load carrier coupling 300 further comprises an urging member 340 for applying an urging force on the supporting portion 330 and the receiving portion 310. The urging member 340 is embodied as a spring and arranged to urge the supporting portion 330 towards the closed state. In order to define the positions of the supporting member and the receiving member with respect to each other in the closed state, the supporting member 330 comprises an abutment portion 337 and the receiving member 312 comprises an abutment portion 314 configured to contact each other when the supporting portion is in the closed state. Due to the presence of the urging member 340 the supporting member 330 normally seeks the closed state.

The load carrier coupling 300 further comprises a locking mechanism 350 for releasably locking a movement between the receiving portion 310 and the supporting portion 330 such that a movement towards the open state is blocked. The locking mechanism 350 comprises a locking lever 351 arranged pivotably on the receiving portion 310, more precisely between the accommodating section 311 and a handle 315 for grasping the receiving member 312, by means of a pivot 353 between a locking position in which a free end 352 of the locking lever 351 contacts an abutment portion 332 of the supporting portion 330 and a release position in which the free end 352 is pivoted away from the abutment portion 332. When the free end 352 is in contact with the abutment portion 332, a movement of the supporting member 332 towards the open state is blocked.

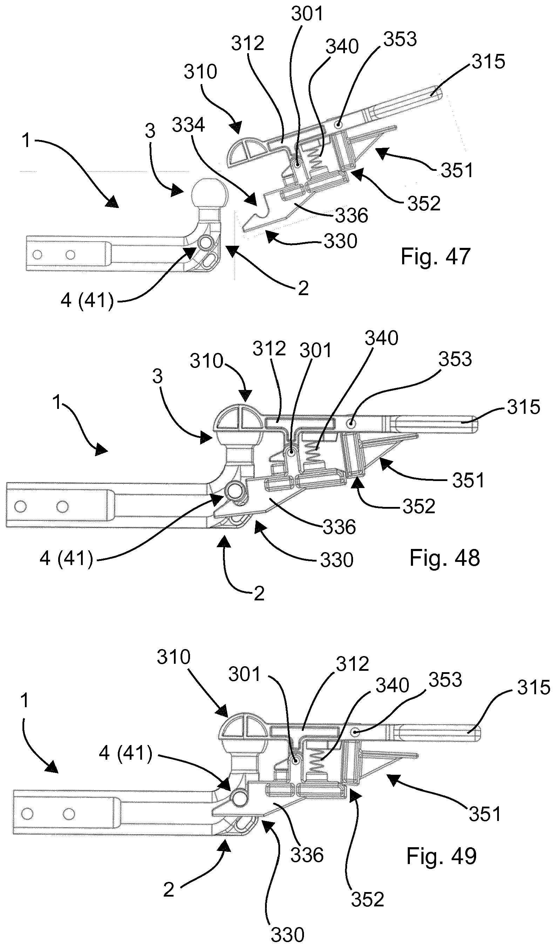

A mounting process of the load carrier coupling 300 on the trailer coupling 1 is shown in Figures 47 to 49. Firstly, the load carrier coupling 300 is positioned such that the receiving portion 310 can be brought into contact with the upper portion of the ball head as is shown in Figure 47. When the receiving portion 310 is supported on the ball head, the load carrier coupling 300 can be rotated downwards about the ball head 3 in order to lock the same on the trailer coupling 1. The supporting portion 330 comprises a guiding surface 333 which is arranged to get in contact with the support protrusion 4. Furthermore, the guiding surface 333 is configured such that a relative movement or sliding movement of the guiding surface 333 on the lateral surface 44 of the support protrusion 4 urges the supporting portion 330 towards the open state as shown in Figure 48. Accordingly, the load carrier coupling can snap on the support protrusion 4 simply by a rotating movement of the load carrier coupling in downward direction and without a specific interaction of the user. Figure 49 shows a state in which the load carrier coupling 300 is moved to the final mounting position in which it is locked on the trailer coupling 1. The recess 334 is engaged with the support protrusion 4 due to the force exerted by the urging member 340. Furthermore, the free end of the locking lever 351 is in contact with the abutment portion 332 so that the load carrier coupling 300 is securely mounted on the trailer coupling 1.

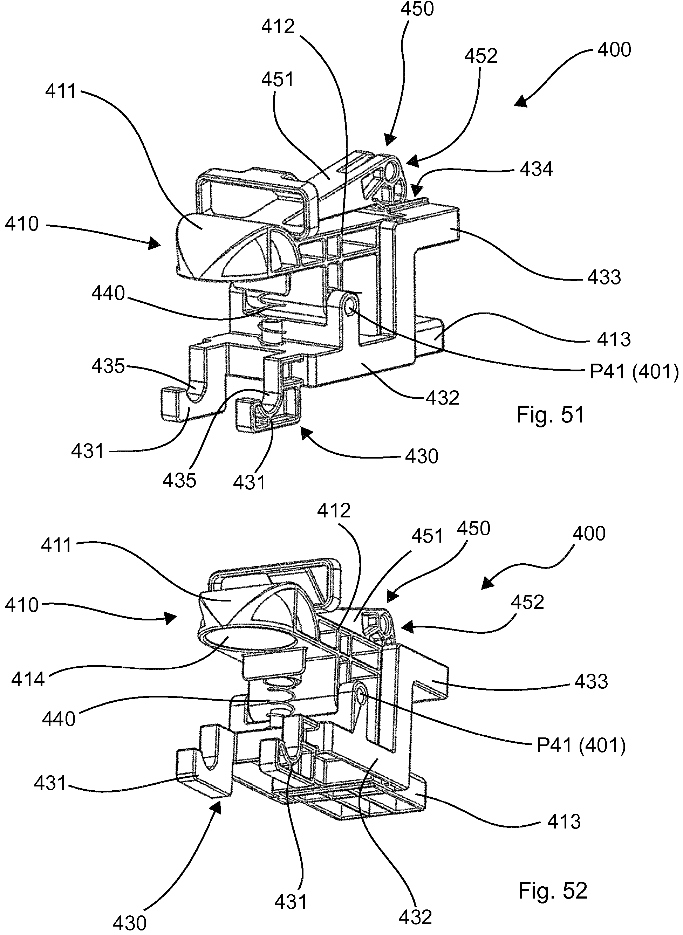

A third embodiment of a load carrier coupling according to the aspect will be described with reference to Figures 51 to 57. Besides the above-mentioned features that are common to all embodiments according to the aspect, the receiving portion 410 is a portion of a receiving member 412. The receiving portion 410 comprises an accommodating section 411 having a contact surface 414 that is oriented in the downward direction. Accordingly, the contact surface 414 is configured to contact the coupling body or ball head 3 from above. As is shown in Figure 52, the receiving portion 410 comprises a bowl-like shape.

The supporting portion 430 is a portion of a supporting member 432 and comprises an engaging section 431 which is configured to contact the support protrusion 4 or cylindrical pin 41. In the third embodiment the engaging section 431 is configured to contact the support protrusion 4 from below. More precisely, the supporting portion 430 and the engaging section 431 are configured such that the support protrusion is contacted at its lateral surface 44 at two different contact sections 42a, 42b on the lower portion 42 of the support protrusion 4. The engaging sections 431 comprise recesses 434 each of which having contact surfaces 435. The recess 434 and its contact surface 435 are formed such that the support protrusion 4 is contacted at two contact sections 42a, 42b which are spaced from each other. The receiving member 412 and the supporting member 432 are hingedly coupled to each other by means of a pivot 401 such that the receiving member 412 is pivotable about a pivot axis P41 with respect to the supporting member 432. In the third embodiment, the receiving member 412 and the supporting member 432 are arranged in a scissor-like style in which the receiving members cross each other when viewed from the side. The receiving member 412 and the supporting member 432 are embodied as levers.

The load carrier coupling 400 further comprises an urging member 440 for applying an urging force on the supporting portion 430 and the receiving portion 410. The urging member 440 is arranged to urge the supporting portion 430 and the receiving portion 410 towards the open state.

The load carrier coupling 400 further comprises a locking mechanism 450 for releasably locking a movement between the receiving portion 410 and the supporting portion 430 such that a movement towards the open state is blocked. The locking mechanism 450 comprises a cam mechanism for varying and locking a distance between the receiving portion 410 an the supporting portion 430. The cam mechanism comprises an operating lever 451 with a cam portion at one end and a handle 455 at the other end. The cam portion comprises a cam surface 452 which is operatively coupled to the supporting portion 430 and is hingedly coupled to a link 457 by means of a pivot 456. The link is operatively coupled to the receiving portion 410, more precisely to a locking section 413 of the receiving member 412, such that a movement of the lever moves the supporting portion 430 towards and away from the receiving portion 410.

The cam surface 452 comprises an engaging surface 453 and a releasing surface 454. The engaging surface 453 is arranged at a greater distance from the pivot 456 than the releasing surface 454. By operating the operating lever 451, the releasing surface 454 and the engaging surface 453 can be selectively brought into contact with a force application section 434 or force application surface on a locking section 433 of the supporting member 432. This leads to an arrangement of the pivot 456 at different distances with respect to the force application surface depending on the lever position. In this way, the locking sections 413, 433 are moved towards and away from each other leading to a corresponding movement of the accommodating section 411 and the engaging section 431.

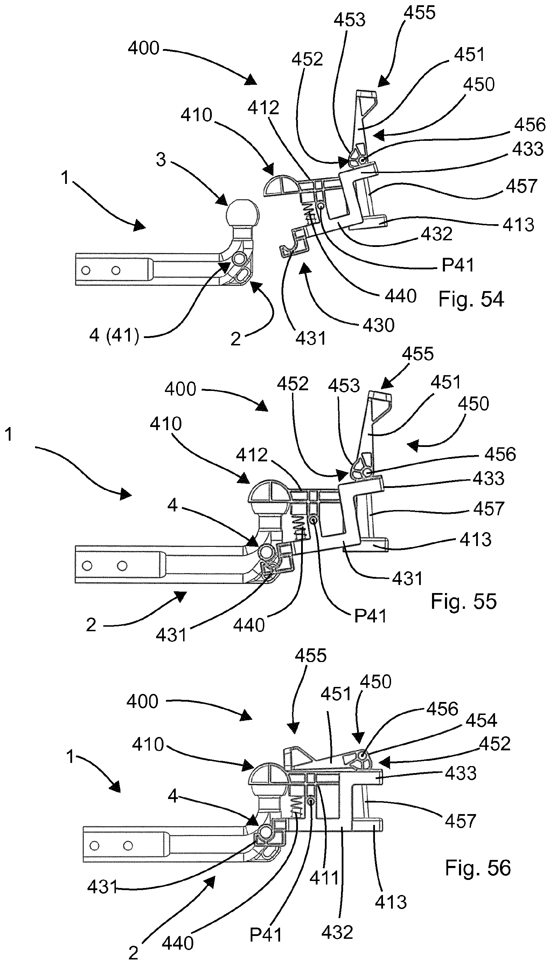

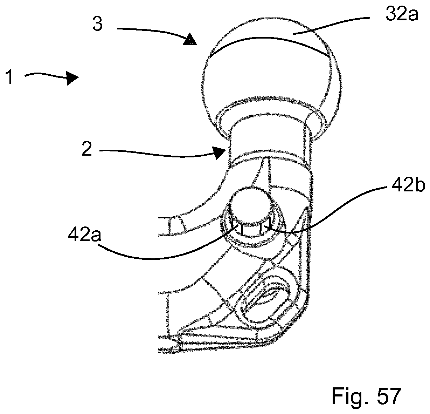

A mounting process of the load carrier coupling 400 on the trailer coupling 1 is shown in Figures 54 to 56. Before inserting the receiving portion 410 on the ball neck 3, the operating lever 451 is brought into a release position in which the above described releasing surface 454 is in contact with the force application section. Due to the urging force of the urging member 440 or spring pushing the accommodating section 411 and the engaging section 431 away from each other, they are moved with respect to each other such that a distance between them is great enough for inserting the load carrier coupling 400 on the trailer coupling 1 as shown in Figure 54. The opened load carrier coupling 400 is then inserted on the trailer coupling such that the accommodating section 411 is supported on the ball head 3 so as to contact contact section 32a on the ball head 3 as shown in Figure 57 and the engaging section 431 is positioned under the support protrusion 4 as shown in Figure 55. After that, the lever is brought into a tightening position in which the engaging surface 453 is in contact with the force application section 434 as shown in Figure 56 and the engaging section 431 is moved into contact with the lower portion of the support protrusion 4 and contacts the same at contact sections 42a, 42b on the lower portion 42 of the support protrusion. In this way, the load carrier coupling 400 is fixedly mounted on the trailer coupling 1. Since a surface portion between the engaging surface 453 and the releasing surface 454 is arranged at a greater distance, the operating lever has a self-locking function.

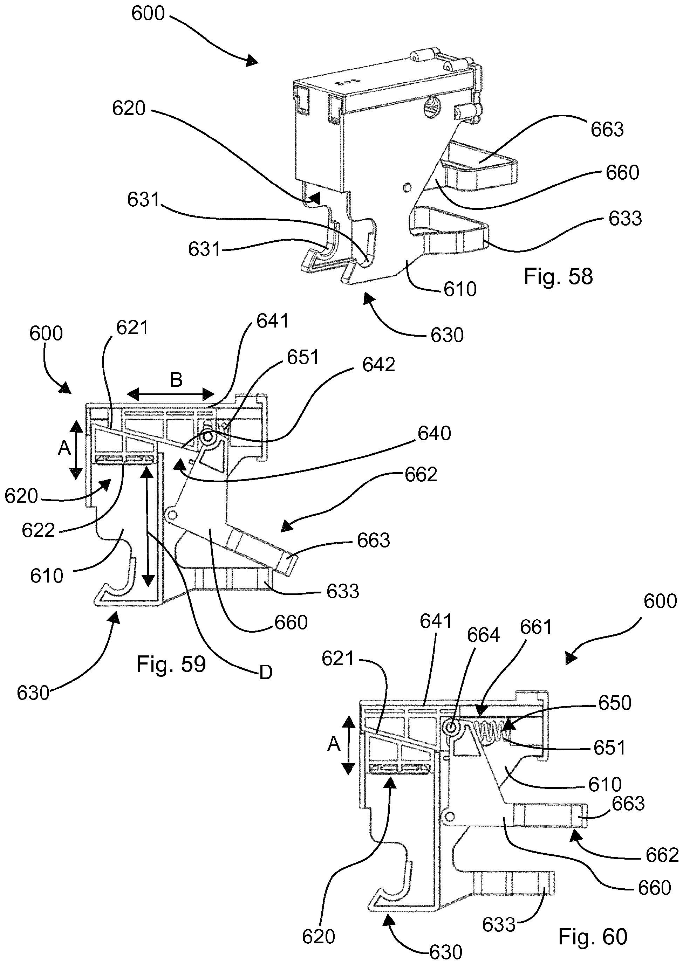

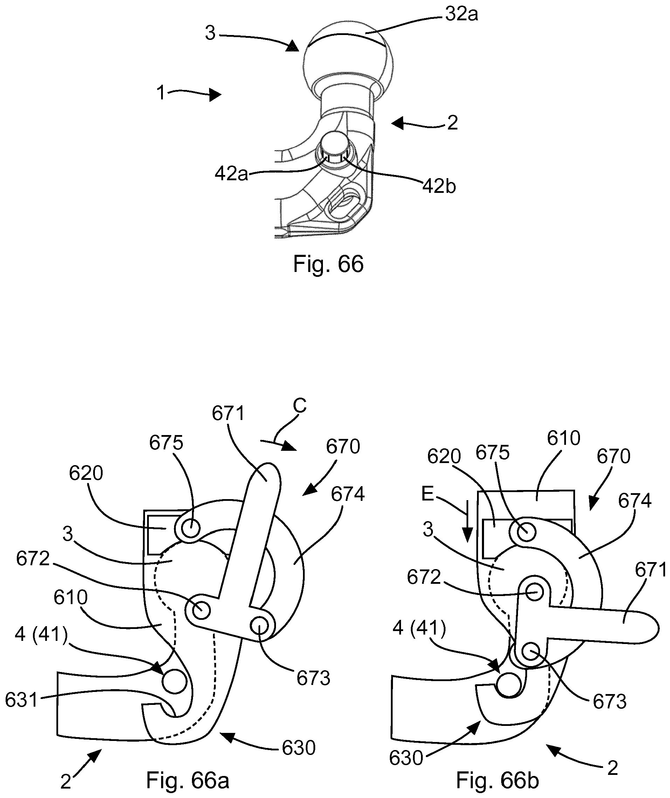

A configuration as well as modifications of a load carrier coupling according to the fourth example will be described with reference to Figures 58 to 66. The load carrier coupling 600 is configured to be used in connection with the above described trailer coupling 1 as mentioned in connection with the other examples and the aspect. The load carrier coupling 600 according to the fourth example comprises a receiving portion 620, a supporting portion 630 and a force transfer member 640. In the configuration, the receiving portion 620 is embodied as a receiving member which is slidably held in a housing 610 of the load carrier coupling 600. The receiving portion or receiving member 620 comprises a force receiving surface 621 for receiving a force from the above described force transfer member 640. Furthermore, the receiving portion 620 comprises an accommodating section 622 with a supporting surface 624 formed therein. The supporting surface 624 is configured to contact an upper portion 32a of the ball head 3 when the load carrier coupling 600 is inserted on the trailer coupling 1 as is shown in Fig. 66. The force receiving surface 621 and the supporting surface 624 are provided on opposite sides of the receiving portion 620. The supporting surface 624 is provided on a lower side of the receiving portion and the force receiving surface 621 is provided on an upper portion of the receiving portion 620.

The receiving portion 620 is slidably held in the housing 610 movable towards and away from the above described supporting portion 630, more precisely in a vertical direction A when the load carrier coupling 600 is inserted on the trailer coupling 1. For that, the receiving portion 620 comprises a guided portion 623 embodied as a cylindrical protrusion which is slidably guided in a guiding portion 611 provided on the housing 610 and embodied as a cylindrical sleeve. By moving the receiving portion 620, a distance D between the supporting portion 630 and the receiving portion is changed allowing to clamp the load carrier coupling 600 on the trailer coupling 1.

The supporting portion 630 comprises a hook-like shape providing a supporting surface 631 which is configured to get in contact with a lateral surface of the support protrusion 4 from below. The supporting portion 630 is configured such that the support protrusion 4 is contacted at two different contact sections 42a, 42b that are spaced from each other on the lateral surface 44 as is shown in Fig. 66. The supporting portion 630 is integrally formed in the housing 610.

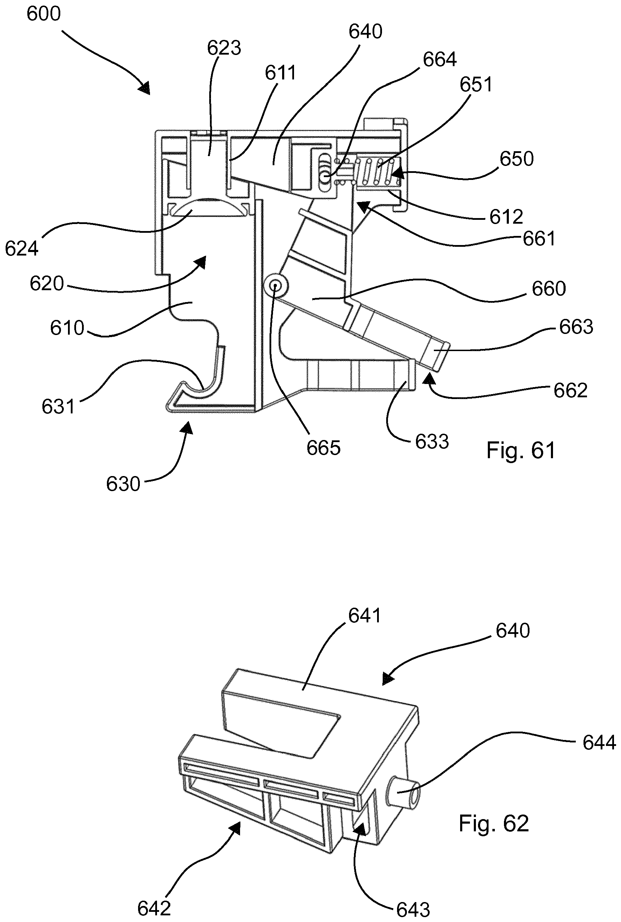

The force transfer member 640 is embodied as a wedge-like member having a supporting surface 641 and a force application surface 642 arranged at an angle with respect to the supporting surface 641. The force transfer member 640 has a fork-like shape such that the supporting surface and the force application surface 642 can pass the above-described guiding portion 611. The force transfer member 640 is shown in detail in Fig. 62. The force application surface 642 is in contact with the force receiving surface 621 of the receiving portion 620. The supporting surface 641 is in contact with an upper inner surface of the housing 610. The force transfer member 640 is arranged movable in a direction B which is substantially perpendicular to the direction A in which the receiving portion 620 is movable. In the present configuration, the force transfer member 640 is movable in horizontal direction when the load carrier coupling is inserted on the trailer coupling. The force receiving surface 621 and the force application surface 642 can get in sliding contact and are arranged at the same angle with respect to a movement direction of the receiving member 620. The supporting surface 641 is arranged perpendicular to the movement direction of the receiving portion 620. Thus, a movement of the force transfer member 640 into a space between the force receiving surface 621 and the upper inner surface of the housing 610 leads to a movement of the supporting surface 624 towards the supporting portion 630 reducing a distance D between the receiving portion 620 and the supporting portion 630. The force application surface 642 and the force receiving surface 621 are provided such that a force acting on the receiving portion 620 cannot effect a movement of the force transfer member 640 due to the angles and frictional characteristics of the surfaces contacting each other.

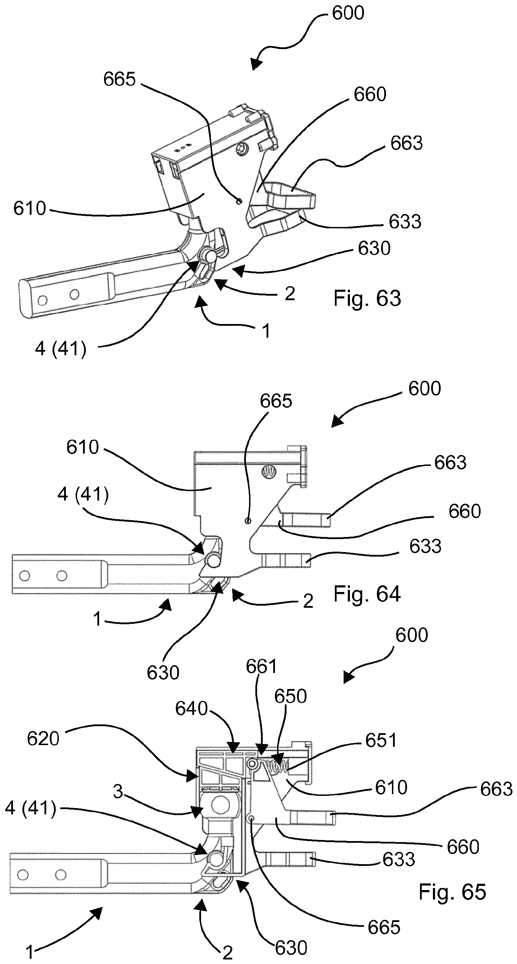

The force transfer member 640 is arranged movable between a disengaging position and an engaging position, wherein in the disengaging position the distance between the receiving portion and the supporting portion is larger than in the engaging position. In the configuration, the disengaging position is shown in Figures 59 and 61, for instance. The engaging position where the force transfer member is fully inserted in the above-mentioned space between the upper inner surface of the housing and the force receiving surface 621 is shown in Figures 60 and 65.

In the present configuration, the force transfer member 640 is prebiased by means of an urging member 650 embodied as a spring 651 towards the engaging position. One end of the spring 651 is received in an accommodating section 612, a cylindrical sleeve, provided on the housing 610 and the other end of the spring 651 is supported on a coupling portion 644 embodied as a cylindrical protrusion provided on the force transfer member 640.

The force transfer member 640 is operable by means of a lever 660. The lever 660 is operatively coupled to the force transfer member 640 and configured to at least move the force transfer member 640 to the disengaging position upon operation of the same. The lever 660 is pivotably coupled to force transfer member 640 at a first end 661 by means of a pivot pin 664 slidably accommodated in a guiding recess 643 formed in said force transfer member 640, and pivotably mounted on the housing 610 by means of a pivot pin 665. The pivot pin 665 is mounted to the housing 610 at a position which is located vertically between the receiving portion and the supporting portion and below the pivot pin 664. The guiding recess 643 is straight and extends in a direction which is substantially perpendicular to the movement direction of the force transfer member 640.The lever 660 comprises a handle 663 on a second end 662 thereof which is configured to be grasped by a user for lever operation.

When mounting the load carrier coupling 600 on the trailer coupling 1, the load carrier coupling is first inserted on the ball head 3 while the handle 663 is moved towards and held near a handle 633 provided on the housing. Due to the operation of the handle 663, the force transfer member 640 is moved such that the receiving portion 620 is allowed to move upwards in order to increase the above-mentioned distance D. After the load carrier coupling 600 is inserted on the trailer coupling 1, the handle 663 is released leading to a movement of the force transfer member 640 to the engaging position which in turn leads to a movement of the receiving portion 620 towards the supporting portion 630 as is shown in Figures 64 and 65. In this way, a pushing force is applied on the ball head 3 on a contact section 32a as shown in Figure 66. This in turn rises the supporting portion 630 and pushes the same against the lower portion of the support protrusion 4 so that the same contacts the contact areas 42a, 42b on the support protrusion 4 as shown in Figure 66.

A further configuration of the fourth example is shown in Figures 66a and 66b. The load carrier coupling according to this configuration differs from the above described load carrier coupling 600 in the mechanism used to move the receiving portion 620. The force transfer member is embodied as a link 674 which is hingedly coupled at one end to the receiving portion 620 by means of a pivot 675 and to an operating lever 671 at a second end thereof by means of a pivot 673. The operating lever 671 is coupled to the housing 610 by means of a pivot 672 which is provided at a predetermined distance from pivot 673. The pivots are arranged such that the resulting pivot axes are parallel with respect to each other. With this configuration, it is possible to move the receiving portion 620 by moving the operating lever 671 about the pivot 672. Figure 66a shows a state in which the receiving portion 620 is moved to an upper portion of the housing 610 such that a distance between the receiving portion 620 and the supporting portion 630 is large enough for inserting the load carrier coupling 600 on the trailer coupling 1. In order to fixedly secure the load carrier coupling 600 on the trailer coupling 1, a user can turn the operating lever 671 in a direction leading to a movement of the receiving portion towards the supporting portion 630, i.e. in downward direction in the drawings. The turning direction of the operating lever 671 is indicated by arrow C in Figure 66a and Figure 66b indicates the resulting movement of the receiving portion 671 with arrow E. When the receiving portion 620 is in contact with the ball head 3, moving the receiving portion 620 downward in the housing 610 leads to a lifting of the housing 610 and thus of the supporting portion 630 which leads to a contact between the supporting portion 630 and the support protrusion 4 as shown in Figure 66b. As can be gathered from Figures 66a and 66b, the linkage mechanism formed by the operating lever 671 and the link 674 is embodied as a knee joint mechanism or knee lever mechanism which has a self locking function in that the operating lever 671 can be brought into an over center position. In order to allow such a movement, the link 674 comprises a curved shape allowing a deformation of the same upon application of a tensile force, i.e. the link 674 acts like a spring element.

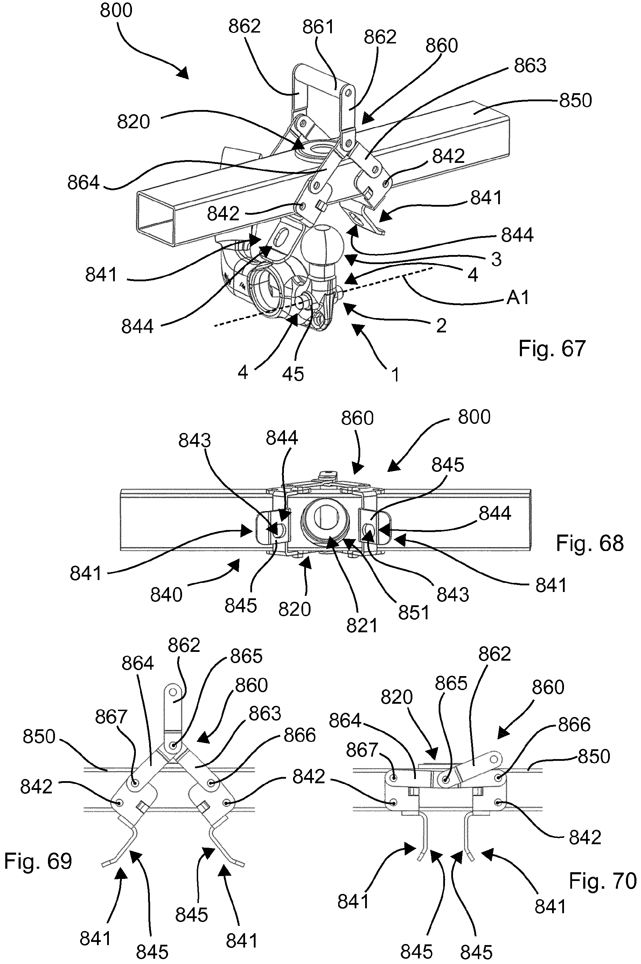

A configuration as well as modifications of a load carrier coupling according to the fifth example will be described with reference to Figures 67 to 73. The load carrier coupling 800 is configured to be used in connection with the above described trailer coupling 1 as mentioned in connection with the other examples.

The load carrier coupling 800 according to the fifth example comprises a contact portion 820 and a supporting mechanism 840. The contact portion 820 is configured to contact at least a portion of the ball head 3. The supporting mechanism 840 comprises two blocking portions 841 which are operatively coupled with the contact portion 820 and movable between a blocking position in which the blocking portions 841 are positioned with respect to the support protrusion 4 such that a movement of the contact portion 820 with respect to the coupling body 3 is substantially blocked in at least one movement direction and a release position in which the blocking portion 841 is positioned with respect to the support protrusion 4 such that a movement of the contact portion 820 with respect to the coupling body 3 is not blocked by the blocking portion 841. The blocking portions 841 are arranged so as to be movable into the blocking position by a movement in an extension direction of the support protrusions 4 in which the support protrusions 4 extends away from the neck 2, and at least partially along lateral surfaces 44 of the support protrusions 4.

The two blocking portions 841 are arranged on opposite sides of the contact portion 820 and arranged movable towards and away from each other.

Each blocking portion 841 is pivotably movable about a pivot 842 which extends perpendicular to and is offset from the extension direction of said support protrusion 4.

Each blocking portion 841 comprises an abutment surface 843 facing the lateral surface 44 when the support protrusion 4 is positioned in the blocking position.

Each blocking portion 841 comprises a recess 844 adapted to accommodate at least a portion of a support protrusion 4. The recess 844 is formed as a through hole extending in the blocking portion 841 in a movement direction of the blocking portion 841.

Each blocking portion 841 is formed from a metal sheet by cutting and bending.

Each blocking portion 841 comprises a contact surface 845 for contacting a neck support surface 45. The neck support surface 45 is a ring-like surface provided at a root portion of the support protrusion 4.

The load carrier coupling 800 further comprises a support structure 850 embodied as a portion of a frame of a load carrier. The support structure 850 comprises a hollow tube-like metal profile. The contact portion 820 and each blocking portion 841 are provided on the support structure 850. The contact portion 820 limits an upper end of an accommodating space 851 for accommodating the coupling member 3. The contact portion 820 is embodied as an adjustable member 821 allowing to adjust a position of the contact portion 820 relative to the support structure 850. In the configuration, the adjustable member 821 is a sleeve like member with an inner surface at the upper end which is configured to contact the ball head 3 and a cylindrical outer wall being threadedly engaged with an inner surface of a supporting sleeve 822 arranged in an opening of the support structure 850.

Each blocking portion 841 is operatively coupled to a knee lever mechanism 860 for moving the blocking portion 841 between the blocking position and the release position. The knee lever mechanism 860 is configured to be brought in an over-center position in which a movement of the blocking portion 841 is blocked. The knee lever mechanism 860 comprises an operating handle 861 for operating the knee lever mechanism 860. The handle 861 is coupled to a first pivot 865 by a first link 862. A second link 863 and a third link 864 are pivotably coupled to the first pivot 865 at one end and respectively pivotably coupled to a blocking portion 841 by means of a second pivot 866 and a third pivot 867. All pivots are arranged such that the pivot axes are arranged parallel with respect to each other. The second link 863 and the third link 864 comprise the same length. A movement of the first pivot 865 in the direction of the ball head 3 moves the second pivot 866 and the third pivot 867 away from each other leading to a rotation of the blocking portions 841 such that their contact surfaces 845 approach each other as can be gathered from Figures 69 and 70. As is shown in Figure 70, the first pivot 865 can be brought in an over-center position in which the same is located at a position below a line connecting the second pivot 866 and the third pivot 867. In this position, the knee-lever mechanism 860 is self-locked. The first pivot 865 can be guided in a guiding portion (not shown) provided on the support structure 850. The guiding portion can be a straight slot in which the pin is slidably accommodated. The slot can be provided on the support structure 850 such that it extends in substantially vertical direction when the load carrier coupling 800 is inserted on the trailer coupling.

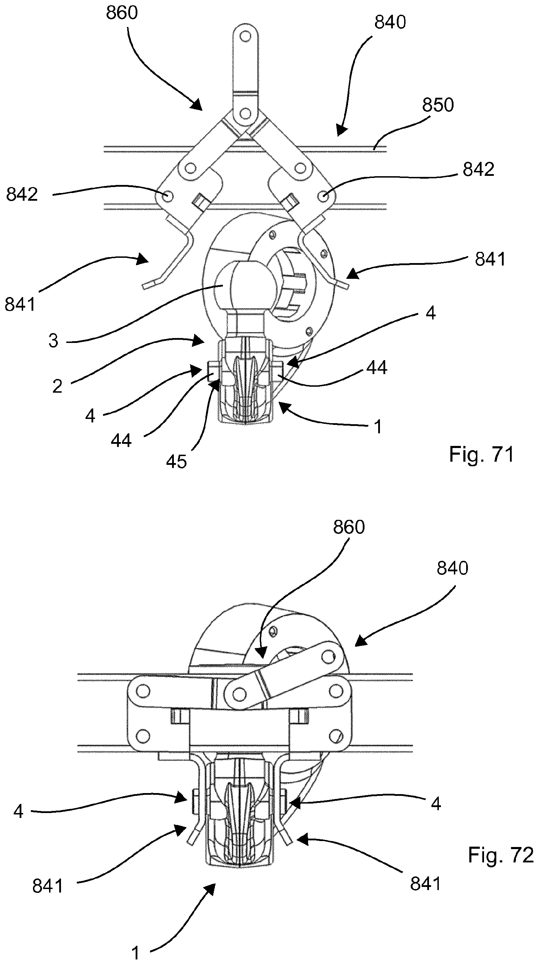

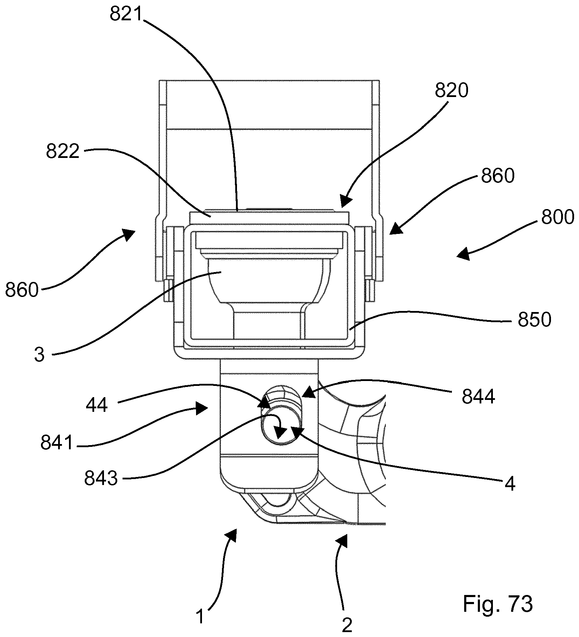

A mounting process of the load carrier coupling 800 is shown in Figures 71 to 73. The load carrier coupling 800 is positioned above the ball head 3 as shown in Figure 71 and lowered onto the ball head 3 until the contact portion 820 is in contact with the upper portion of the ball head 3. After that, the handle is pushed downwards by a user in order to rotate the blocking portions 841 on the support protrusions 4 as shown in Figure 72 and Figure 73. When the recesses 844 embodied as elongate openings are fully moved onto the support protrusions 4, each lateral surface 44 faces an abutment surface 843 embodied as an inner surface of the recesses 844. A movement of the load carrier coupling 800 in the upward direction and a rotation of the load carrier coupling 800 about the ball head 3 are prevented by a contact between the inner surface of the recesses 844 and the lateral surface 44 of the support protrusions. As is shown in the Figures, the recesses 844 can comprise a slot-like shape. By rotating the blocking portions 841 about the pivots 842, a lower portion of the inner surface of the recesses 844 is brought into contact with a lower portion of the support protrusions 4. As soon as such a contact is established, the blocking portions 841 can be further urged about the pivots 842 which leads to an application of a pushing force on the lower portions of the support protrusions 4 by the lower portion of the inner surface contacting the lateral surfaces 44 of the support protrusions. In other words, the blocking portions 841 are rotated beyond a position of first contact with the support protrusion. In this way, the receiving portion 820 is pulled onto an upper portion of the ball head 3 so that clamping of the load carrier coupling 800 is effected by clamping forces acting on the upper portion of the ball head 3 and the lower portions of the support protrusions 4. Accordingly, the supporting mechanism 840 is configured to apply a tightening force on the blocking portion 841 when the blocking portion 841 is in contact with said support protrusion 4.

## Claims

1. Load carrier coupling (200; 300; 400) for mounting a load carrier on a trailer coupling (1) of a vehicle, said trailer coupling (1) comprising a neck (2), a coupling body (3), preferably a ball head, supported by said neck (2), and at least one support protrusion (4), preferably a cylindrical pin (41), provided on said neck (2), said load carrier coupling (200; 300; 400) comprising
a receiving member (212; 312; 412) comprising a receiving portion (210; 310; 410) having an accommodating section (211; 311; 411) configured to accommodate a portion of said coupling body (3), and
a supporting member (232; 336; 432) comprising a supporting portion (230; 330; 430) having an engaging section (231; 331; 431) configured to contact at least one support protrusion (4),
wherein said receiving member (212; 312; 412) and said supporting member (232; 336; 432) are hingedly coupled to each other by means of a pivot (201; 301; 401) such that a distance between said accommodating section (211; 311; 411) and said engaging section (231; 331; 431) can be varied by pivoting said receiving member (212; 312; 412) or said supporting member (232; 336; 432) about said pivot (201; 301; 401) between an open state in which said distance between said accommodating section (211; 311; 411) and the engaging section (231; 331; 431) is such that said load carrier coupling (200; 300; 400) is insertable on said trailer coupling (1) and a closed state in which said distance is such that an inserted load carrier coupling (200; 300; 400) cannot be removed from said trailer coupling (1),
**characterized in that** said load carrier coupling (200; 300; 400) is configured such that in a condition in which said load carrier coupling (200; 300; 400) is mounted on said trailer coupling (1), said pivot (201; 301; 401) is located at a position which is vertically between said coupling body (3) and said support protrusion (4) and/or **in that** said receiving member (212; 312; 412) and said supporting member (232; 336; 432) are coupled to each other pivotable about a single pivot axis (P20; P30; P41).

2. Load carrier coupling (200) according to claim 1, wherein said receiving portion (210) is configured to contact said coupling body (3) from below and wherein said supporting portion (230) is configured to contact said support protrusion (4) from above.

3. Load carrier coupling (200; 300; 400) according to claim 1, wherein said receiving portion (310; 410) is configured to contact said coupling body (3) from above and wherein said supporting portion (330; 430) is configured to contact said support protrusion (4) from below.

4. Load carrier coupling (200; 300; 400) according to claim 1, further comprising an urging member (240; 340; 440) for applying an urging force on said supporting portion (230; 330; 430) and said receiving portion (210; 310; 410), wherein said urging member (440) is arranged to urge said supporting portion (430) and said receiving portion (410) towards said open state or wherein said urging member (240; 340) is arranged to urge said supporting portion (230; 330) and said receiving portion (210; 310) towards said closed state.

5. Load carrier coupling (200; 300; 400) according to one of the preceding claims, further comprising a locking mechanism (250; 350; 450) for releasably locking a movement between said receiving portion (210; 310; 410) and said supporting portion (230; 330; 430) such that a movement towards said open state is blocked.

6. Load carrier coupling (200) according to claim 5, wherein said locking mechanism (250) comprises a tightening member (251) with an abutment portion (252), the position of said abutment portion (252) being variable by rotation of the tightening member (251) about its own longitudinal axis.

7. Load carrier coupling (300) according to claim 5, wherein said locking mechanism (350) comprises a locking lever (351) arranged pivotably on said receiving portion (310) between a locking position in which a free end (352) of said locking lever (351) contacts an abutment portion (332) of said supporting portion (330) and a release position in which said free end (352) is pivoted away from said abutment portion (332).

8. Load carrier coupling (400) according to claim 5, wherein said locking mechanism (450) comprises a cam mechanism for varying and locking a distance between said receiving portion (410) an said supporting portion (430), said cam mechanism preferably comprising an operating lever (451) comprising a cam portion, wherein said cam portion comprises a cam surface (452) which is operatively coupled to said receiving portion (410) or said supporting portion (430), and further hingedly coupled to a link (457) which is operatively coupled to the other one of the supporting portion (430) or the receiving portion (410) such that a movement of the lever moves said receiving portion (410) and said supporting portion (430) towards and away from each other.

## Patentansprüche

1. Lastenträgerkupplung (200; 300; 400) zum Anbringen eines Lastenträgers an einer Anhängerkupplung (1) eines Fahrzeugs, wobei die Anhängerkupplung (1) einen Hals (2), einen Kupplungskörper (3), vorzugsweise einen Kugelkopf, gestützt von dem Hals (2), und mindestens einen Stützvorsprung (4), vorzugsweise einen zylindrischen Stift (41), der auf dem Hals (2) bereitgestellt ist, umfasst, wobei die Lastenträgerkupplung (200; 300; 400) umfasst
ein Empfangselement (212; 312; 412), umfassend einen Empfangsabschnitt (210; 310; 410) mit einem Aufnahmeteil (211; 311; 411), der konfiguriert ist, um einen Abschnitt des Kupplungskörpers (3) aufzunehmen, und
ein Stützelement (232; 336; 432), umfassend einen Stützabschnitt (230; 330; 430) mit einem Eingriffteil (231; 331; 431), der konfiguriert ist, um mindestens einen Stützvorsprung (4) zu berühren,
wobei das Empfangselement (212; 312; 412) und das Stützelement (232; 336; 432) klappbar miteinander mittels eines Gelenks (201; 301; 401) verbunden sind, so dass ein Abstand zwischen dem Aufnahmeteil (211; 311; 411) und dem Eingriffteil (231; 331; 431) variiert werden kann, indem das Empfangselement (212; 312; 412) oder das Stützelement (232; 336; 432) zwischen einem offenen Zustand, in dem der Abstand zwischen dem Aufnahmeteil (211; 311; 411) und dem Eingriffteil (231; 331; 431) derart ist, dass die Lastenträgerkupplung (200; 300; 400) an der Anhängerkupplung (1) einsetzbar ist, und einem geschlossenen Zustand, in dem der Abstand derart ist, dass eine eingesetzte Lastträgerkupplung (200; 300; 400) nicht aus der Anhängerkupplung (1) entfernt werden kann, um das Gelenk (201; 301; 401) geschwenkt wird,
**dadurch gekennzeichnet, dass** die Lastenträgerkupplung (200; 300; 400) derart konfiguriert ist, dass in einem Zustand, in dem die Lastenträgerkupplung (200; 300; 400) an der Anhängerkupplung (1) montiert ist, sich das Gelenk (201; 301; 401) an einer Position befindet, die vertikal zwischen dem Kupplungskörper (3) und dem Stützvorsprung (4) ist, und/oder dass das Empfangselement (212; 312; 412) und das Stützelement (232; 336; 432) schwenkbar um eine einzige Schwenkachse (P20; P30; P41) miteinander gekuppelt sind.

2. Lastenträgerkupplung (200) nach Anspruch 1, wobei der Empfangsabschnitt (210) konfiguriert ist, um den Kupplungskörper (3) von unten zu berühren, und wobei der Stützabschnitt (230) konfiguriert ist, um den Stützvorsprung (4) von oben zu berühren.

3. Lastenträgerkupplung (200; 300; 400) nach Anspruch 1, wobei der Empfangsabschnitt (310; 410) konfiguriert ist, um den Kupplungskörper (3) von oben zu berühren, und wobei der Stützabschnitt (330; 430) konfiguriert ist, um den Stützvorsprung (4) von unten zu berühren.

4. Lastenträgerkupplung (200; 300; 400) nach Anspruch 1, ferner umfassend ein Druckelement (240; 340; 440) zum Anwenden einer Druckkraft auf den Stützabschnitt (230; 330; 430) und den Empfangsabschnitt (210; 310; 410), wobei das Druckelement (440) angeordnet ist, um den Stützabschnitt (430) und den Empfangsabschnitt (410) zu dem offenen Zustand zu drücken, oder wobei das Druckelement (240; 340) angeordnet ist, um den Stützabschnitt (230; 330) und den Empfangsabschnitt (210; 310) zu dem geschlossenen Zustand zu drücken.

5. Lastenträgerkupplung (200; 300; 400) nach einem der vorstehenden Ansprüche, ferner umfassend einen Sperrmechanismus (250; 350; 450) zum derartigen lösbaren Sperren einer Bewegung zwischen dem Empfangsabschnitt (210; 310; 410) und dem Stützabschnitt (230; 330; 430), dass eine Bewegung in Richtung des offenen Zustands blockiert ist.

6. Lastenträgerkupplung (200) nach Anspruch 5, wobei der Sperrmechanismus (250) ein Spannelement (251) mit einem Anschlagabschnitt (252) umfasst, wobei die Position des Anschlagabschnitts (252) durch Drehung des Spannelements (251) um seine eigene Längsachse variabel ist.

7. Lastenträgerkupplung (300) nach Anspruch 5, wobei der Sperrmechanismus (350) einen Sperrhebel (351) umfasst, der an dem Empfangsabschnitt (310) zwischen einer Sperrposition, in der ein freies Ende (352) des Sperrhebels (351) einen Anschlagabschnitt (332) des Stützabschnitts (330) berührt, und einer Freigabeposition, in der das freie Ende (352) vom Anschlagabschnitt (332) weggeschwenkt ist, schwenkbar angeordnet ist.

8. Lastenträgerkupplung (400) nach Anspruch 5, wobei der Sperrmechanismus (450) einen Nockenmechanismus zum Variieren und Sperren eines Abstands zwischen dem Empfangsabschnitt (410) und dem Stützabschnitt (430) umfasst, wobei der Nockenmechanismus vorzugsweise einen Bedienhebel (451) umfasst, der einen Nockenabschnitt umfasst, wobei der Nockenabschnitt eine Nockenfläche (452) umfasst, die wirksam mit dem Empfangsabschnitt (410) oder dem Stützabschnitt (430) gekuppelt ist und ferner klappbar mit einer Verbindung (457) gekuppelt ist, die wirksam mit dem anderen des Stützabschnitts (430) oder des Empfangsabschnitts (410) derart gekuppelt ist, dass eine Bewegung des Hebels den Empfangsabschnitt (410) und den Stützabschnitt (430) in Richtung zu und weg von einander bewegt.

## Revendications

1. Dispositif d'accouplement (200 ; 300 ; 400) pour un porte-charge, pour montage d'un porte-charge sur un attelage de remorque (1) d'un véhicule, ledit attelage de remorque (1) comprenant un col (2), un corps d'accouplement (3), de préférence une rotule, soutenu par ledit col (2), et au moins une saillie de soutènement (4), de préférence une tige cylindrique (41), disposée sur ledit col (2), ledit dispositif d'accouplement (200 ; 300 ; 400) pour un porte-charge comprenant :
un élément de réception (212 ; 312 ; 412) comprenant une portion de réception (210 ; 310 ; 410) ayant une section formant logement (211 ; 311 ; 411) conçue pour loger une portion dudit corps d'accouplement (3), et
un élément de soutènement (232 ; 336 ; 432) comprenant une portion de soutènement (230 ; 330 ; 430) ayant une section d'appui (231 ; 331 ; 431) conçue pour entrer en contact avec au moins une saillie de soutènement (4),
dans lequel ledit élément de réception (212 ; 312 ; 412) et ledit élément de soutènement (232 ; 336 ; 432) sont accouplés par articulation l'un à l'autre au moyen d'un pivot (201 ; 301 ; 401) de telle sorte qu'il soit possible de faire varier une distance entre ladite section formant logement (211 ; 311 ; 411) et ladite section d'appui (231 ; 331 ; 431) par pivotement dudit élément de réception (212 ; 312 ; 412) ou dudit élément de soutènement (232 ; 336 ; 432) autour dudit pivot (201 ; 301 ; 401) entre un état ouvert dans lequel ladite distance entre ladite section formant logement (211 ; 311 ; 411) et la section d'appui (231 ; 331 ; 431) est telle que ledit dispositif d'accouplement (200 ; 300 ; 400) pour un porte-charge peut être inséré sur ledit attelage de remorque (1), et un état fermé dans lequel ladite distance est telle qu'un dispositif d'accouplement (200 ; 300 ; 400) pour un porte-charge, inséré, ne peut être enlevé dudit attelage de remorque (1),
**caractérisé en ce que** ledit dispositif d'accouplement (200 ; 300 ; 400) pour un porte-charge est conçu de telle sorte que, dans un état dans lequel ledit dispositif d'accouplement (200 ; 300 ; 400) pour un porte-charge est monté sur ledit attelage de remorque (1), ledit pivot (201 ; 301 ; 401) se trouve sur une position qui est verticalement entre ledit corps d'accouplement (3) et ladite saillie de soutènement (4) et/ou **en ce que** ledit élément de réception (212 ; 312 ; 412) et ledit élément de soutènement (232 ; 336 ; 432) sont couplés l'un à l'autre avec possibilité de pivotement autour d'un axe de pivotement unique (P20 ; P30 ; P41).

2. Dispositif d'accouplement (200) pour un porte-charge selon la revendication 1, dans lequel ladite portion de réception (210) est conçue pour entrer en contact avec ledit corps d'accouplement (3) par en-dessous, et dans lequel ladite portion de soutènement (230) est conçue pour entrer en contact avec ladite saillie de soutènement (4) par en haut.

3. Dispositif d'accouplement (200 ; 300 ; 400) pour un porte-charge selon la revendication 1, dans lequel ladite portion de réception (310 ; 410) est conçue pour entrer en contact avec ledit corps d'accouplement (3) par en haut et dans lequel ladite portion de soutènement (330 ; 430) est conçue pour entrer en contact avec ladite saillie de soutènement par en-dessous.

4. Dispositif d'accouplement (200 ; 300 ; 400) pour un porte-charge selon la revendication 1, comprenant en outre un élément de poussée (240 ; 340 ; 440) destiné à appliquer une force de poussée sur ladite portion de soutènement (230 ; 330 ; 430) et ladite portion de réception (210 ; 310 ; 410), dans lequel ledit élément de poussée (440) est agencé de façon à pousser ladite portion de soutènement (430) et ladite portion de réception (410) vers ledit état ouvert, ou dans lequel ledit élément de poussée (240 ; 340) est agencé pour pousser ladite portion de soutènement (230 ; 330) et ladite portion de réception (210 ; 310) vers ledit état fermé.

5. Dispositif d'accouplement (200 ; 300 ; 400) pour un porte-charge selon l'une quelconque des revendications précédentes, comprenant en outre un mécanisme de verrouillage (250 ; 350 ; 450) pour bloquer avec possibilité de libération un déplacement entre ladite portion de réception (210 ; 310 ; 410) et ladite portion de soutènement (230 ; 330 ; 430) de façon à bloquer un déplacement vers ledit état ouvert.

6. Dispositif d'accouplement (200) pour un porte-charge selon la revendication 5, dans lequel ledit mécanisme de verrouillage (250) comprend un élément de serrage (251) comportant une portion en butée (252), la position de ladite portion en butée (252) pouvant varier par une rotation de l'élément de serrage (251) autour de son propre axe longitudinal.

7. Dispositif d'accouplement (300) pour un porte-charge selon la revendication 5, dans lequel ledit mécanisme de verrouillage (350) comprend un levier de verrouillage (351) agencé en pivotement sur ladite portion de réception (310) entre une position de verrouillage dans laquelle une extrémité libre (352) dudit levier de verrouillage (351) entre en contact avec une portion de butée (332) de ladite portion de soutènement (330) et une position de libération dans laquelle ladite extrémité libre (352) est éloignée par pivotement de ladite portion de butée (332).

8. Dispositif d'accouplement (400) pour un porte-charge selon la revendication 5, dans lequel ledit mécanisme de verrouillage (450) comprend un mécanisme à came pour faire varier et bloquer une distance entre ladite portion de réception (410) et ladite portion de soutènement (430), ledit mécanisme à came comprenant de préférence un levier de manoeuvre (451) comprenant une portion formant came, ladite portion formant came comprenant une surface de came (452) qui est fonctionnellement couplée à ladite portion de réception (410) ou à ladite portion de soutènement (430), et est en outre couplée par articulation à une pièce de liaison (457) qui est fonctionnellement couplée à l'autre de la portion de soutènement (430) ou portion de réception (410) de telle sorte qu'un déplacement du levier déplace ladite portion de réception (410) et ladite portion de soutènement (430) de façon à les rapprocher ou les écarter l'une de l'autre..
